# EUROPEAN PATENT APPLICATION

(11) **EP 4 786 261 A1**
(43) Date of publication of application: **05.08.2026**
(21) Application number: 24869984.5
(22) Date of filing: 15.07.2024
(51) Int. Cl.: B60L 53/302, B60L 58/26, B60L 53/16, B60L 53/31

(54) **ELECTRIC VEHICLE**

(30) Priority: 30.09.2023 CN 202311287651
(71) Applicant: Huawei Digital Power Technologies Co., Ltd., Shenzhen, Guangdong 518043 (CN)
(72) Inventor: HU, Minggui, Shenzhen, Guangdong 518043 (CN); CHENG, Dong, Shenzhen, Guangdong 518043 (CN); LIAO, Mengxiong, Shenzhen, Guangdong 518043 (CN)
(74) Representative: Maiwald GmbH
(86) International application number: PCT/CN2024/105416
(87) International publication number: WO 2025/066429

(57) **Abstract**

An electric vehicle (300) is provided. The electric vehicle (300) includes a power battery (320) and a thermal management system (330). The thermal management system (330) includes a first cooling loop (331), a second cooling loop (332), a first heat exchanger (333), and a cooling component (334). The first cooling loop (331) exchanges heat with the second cooling loop (332) via the first heat exchanger (333). The second cooling loop (332) is configured to cool the power battery (320). The cooling component (334) includes a cooling liquid inlet pipeline (3341) and a cooling liquid outlet pipeline (3342), and the cooling liquid inlet pipeline (3341) and the cooling liquid outlet pipeline (3342) are separately configured to connect to an off-vehicle liquid cooling device to form a third cooling loop with the off-vehicle liquid cooling device. When the power battery (320) is charged at a high power, the thermal management system (330) can cool the power battery (320) by using a liquid-phase cooling medium transmitted by the off-vehicle liquid cooling device in the third cooling loop. This helps meet a heat dissipation requirement of the power battery (320) during high-power charging, facilitates high-power charging of the electric vehicle (300), and shortens charging duration of the electric vehicle (300).

## Description

This application claims priority to Chinese Patent Application No. 202311287651.9, filed with the China National Intellectual Property Administration on September 30, 2023 and entitled "ELECTRIC VEHICLE", which is incorporated herein by reference in its entirety.

### TECHNICAL FIELD

This application relates to the field of charging technologies, and more specifically, to an electric vehicle.

### BACKGROUND

With a breakthrough in high-power charging technologies for batteries, the battery can be fully charged within a short period of time. However, in current actual application, when a charging apparatus charges a power battery at a high power, heat generated by the power battery greatly increases accordingly. If the heat cannot be eliminated in time, the charging apparatus cannot normally charge the power battery at the high power.

The electric vehicle usually has a thermal management system that can provide cold required for heat dissipation of the power battery. However, as a charging power increases, the power battery generates more heat, effect of dissipating heat only via the thermal management system is very limited, and a heat dissipation capability of the thermal management system cannot meet a heat dissipation requirement of the power battery during high-power charging.

### SUMMARY

This application provides an electric vehicle. A thermal management system of the electric vehicle can form a cooling loop of a power battery with an off-vehicle liquid cooling device. Therefore, when the power battery is charged at a high power, the thermal management system can cool the power battery by using a liquid-phase cooling medium transmitted by the off-vehicle liquid cooling device. This helps meet a heat dissipation requirement of the power battery during high-power charging, facilitates high-power charging of the electric vehicle, and shortens charging duration of the electric vehicle.

According to a first aspect, an electric vehicle is provided. The electric vehicle includes a power battery and a thermal management system. The thermal management system includes a first cooling loop, a second cooling loop, a first heat exchanger, and a cooling component. The first heat exchanger includes a first heat exchange channel and a second heat exchange channel. The first heat exchange channel is connected to the first cooling loop. The power battery and the second heat exchange channel are sequentially connected to the second cooling loop. The first cooling loop exchanges heat with the second cooling loop via the first heat exchanger. The second cooling loop is configured to cool the power battery. The cooling component includes a cooling liquid inlet pipeline and a cooling liquid outlet pipeline. The cooling liquid inlet pipeline and the cooling liquid outlet pipeline are separately configured to connect to the off-vehicle liquid cooling device to form a third cooling loop with the off-vehicle liquid cooling device. The third cooling loop is configured to cool the power battery.

In this embodiment of this application, the thermal management system is provided with the first cooling loop and the second cooling loop that are connected to the first heat exchanger. The first cooling loop can exchange heat with the second cooling loop via the first heat exchanger, to cool a liquid-phase cooling medium in the second cooling loop, thereby implementing a cooling cycle of the liquid-phase cooling medium in the second cooling loop for the power battery connected to the second cooling loop. In addition, the thermal management system can form the third cooling loop with the off-vehicle liquid cooling device by using the disposed cooling liquid inlet pipeline and the disposed cooling liquid outlet pipeline. Therefore, when the power battery is charged at a high power, the thermal management system can cool the power battery by using the liquid-phase cooling medium transmitted by the off-vehicle liquid cooling device in the third cooling loop. This helps meet a heat dissipation requirement of the power battery during high-power charging, facilitates high-power charging of the electric vehicle, and shortens charging duration of the electric vehicle.

With reference to the first aspect, in some implementations of the first aspect, the cooling component further includes a first three-way valve and a second three-way valve. An input end of the power battery is connected to one end of the second heat exchange channel through the first three-way valve, and an output end of the power battery is connected to the other end of the second heat exchange channel through the second three-way valve. One end of the cooling liquid inlet pipeline is configured to connect to the off-vehicle liquid cooling device, and the other end of the cooling liquid inlet pipeline is connected to the input end of the power battery through the first three-way valve. One end of the cooling liquid outlet pipeline is configured to connect to the off-vehicle liquid cooling device, and the other end of the cooling liquid outlet pipeline is connected to the output end of the power battery through the second three-way valve, to form the third cooling loop.

In this embodiment of this application, the end of the cooling liquid inlet pipeline and the end of the cooling liquid outlet pipeline are separately connected to the off-vehicle liquid cooling device, and the other end of the cooling liquid inlet pipeline and the other end of the cooling liquid outlet pipeline are respectively connected, through the first three-way valve and the second three-way valve, to the input end and the output end of the power battery located in the second cooling loop, to form the third cooling loop connected in parallel to the second cooling loop. In this way, the liquid-phase cooling medium in the off-vehicle liquid cooling device can circulate in the third cooling loop, to cool the power battery connected to the third cooling loop.

With reference to the first aspect, in some implementations of the first aspect, the cooling component further includes a first three-way valve and a second three-way valve. The first three-way valve, the second heat exchange channel, the power battery, and the second three-way valve are sequentially connected to the second cooling loop. One end of the cooling liquid inlet pipeline is configured to connect to the off-vehicle liquid cooling device, and the other end of the cooling liquid inlet pipeline is sequentially connected to the second heat exchange channel and the input end of the power battery through the first three-way valve. One end of the cooling liquid outlet pipeline is configured to connect to the off-vehicle liquid cooling device, and the other end of the cooling liquid outlet pipeline is connected to the output end of the power battery through the second three-way valve, to form the third cooling loop.

In this embodiment of this application, the end of the cooling liquid outlet pipeline and the end of the cooling liquid outlet pipeline are separately connected to the off-vehicle liquid cooling device, the other end of the cooling liquid inlet pipeline is connected to the second heat exchange channel located in the second cooling loop and the input end of the power battery through the first three-way valve, and the other end of the cooling liquid outlet pipeline is connected to the output end of the power battery through the second three-way valve, to form the third cooling loop connected in series to the second cooling loop. Therefore, when the power battery is cooled by the off-vehicle liquid cooling device, the thermal management system may cool the power battery by using all of the third cooling loop formed in the off-vehicle liquid cooling device, the on-vehicle second cooling loop, and the first cooling loop. This helps further improve cooling efficiency of the thermal management system for the power battery, to further meet a heat dissipation requirement of the power battery during high-power charging.

With reference to the first aspect, in some implementations of the first aspect, the cooling component further includes a stop valve, and the stop valve is connected to the second cooling loop and is located between the first three-way valve and the second three-way valve.

In this embodiment of this application, when the third cooling loop including the off-vehicle liquid cooling device, the cooling liquid inlet pipeline, and the cooling liquid outlet pipeline is connected in series to the second cooling loop, the stop valve is disposed between the first three-way valve and the second three-way valve, to improve reliability of series connection between the third cooling loop and the second cooling loop.

With reference to the first aspect, in some implementations of the first aspect, the cooling component further includes a second heat exchanger. The second heat exchanger includes two heat exchange channels. One of the two heat exchange channels is connected to the second cooling loop. One end of the cooling liquid inlet pipeline is configured to connect to the off-vehicle liquid cooling device, and the other end of the cooling liquid inlet pipeline is connected to one end of the other one of the two heat exchange channels. One end of the cooling liquid outlet pipeline is configured to connect to the off-vehicle liquid cooling device, and the other end of the cooling liquid outlet pipeline is connected to the other end of the other heat exchange channel, to form the third cooling loop. The third cooling loop exchanges heat with the second cooling loop via the second heat exchanger.

In this embodiment of this application, the liquid-phase cooling medium transmitted by the off-vehicle liquid cooling device to the third cooling loop can cool the liquid-phase cooling medium in the second cooling loop in a heat exchange manner via the second heat exchanger, to implement a cooling cycle of the liquid-phase cooling medium in the second cooling loop for the power battery connected to the second cooling loop. This can avoid a problem of affecting purity of the liquid-phase cooling medium in the second cooling loop because the liquid-phase cooling medium transmitted by the off-vehicle liquid cooling device flows into the second cooling loop. This helps ensure cooling effect of the liquid-phase cooling medium in the second cooling loop for the power battery.

With reference to the first aspect, in some implementations of the first aspect, the first heat exchanger further includes a third heat exchange channel. One end of the cooling liquid inlet pipeline is configured to connect to the off-vehicle liquid cooling device, and the other end of the cooling liquid inlet pipeline is connected to one end of the third heat exchange channel. One end of the cooling liquid outlet pipeline is configured to connect to the off-vehicle liquid cooling device, and the other end of the cooling liquid outlet pipeline is connected to the other end of the third heat exchange channel, to form the third cooling loop. The third cooling loop exchanges heat with the second cooling loop via the first heat exchanger.

In this embodiment of this application, the liquid-phase cooling medium transmitted by the off-vehicle liquid cooling device to the third cooling loop can cool the liquid-phase cooling medium in the second cooling loop in a heat exchange manner via the first heat exchanger, to implement a cooling cycle of the liquid-phase cooling medium in the second cooling loop for the power battery connected to the second cooling loop. This can avoid a problem of affecting purity of the liquid-phase cooling medium in the second cooling loop because the liquid-phase cooling medium transmitted by the off-vehicle liquid cooling device flows into the second cooling loop. This helps ensure cooling effect of the liquid-phase cooling medium in the second cooling loop for the power battery.

With reference to the first aspect, in some implementations of the first aspect, the electric vehicle further includes a vehicle-mounted charging connection apparatus. The vehicle-mounted charging connection apparatus includes at least one vehicle-end charging input interface, a vehicle-end charging output interface, a first liquid inlet/outlet, and a second liquid inlet/outlet. Each of the at least one vehicle-end charging input interface is electrically connected to the power battery through the vehicle-end charging output interface. Each vehicle-end charging input interface is configured to electrically connect to a charging device, so that the charging device outputs a direct current to the power battery. The first liquid inlet/outlet is connected to the second liquid inlet/outlet, the second liquid inlet/outlet is separately connected to one end of the cooling liquid inlet pipeline and one end of the cooling liquid outlet pipeline, and the first liquid inlet/outlet is configured to connect to the off-vehicle liquid cooling device, to form the third cooling loop.

In this embodiment of this application, the vehicle-mounted charging connection apparatus is provided with the vehicle-end charging input interface and the vehicle-end charging output interface that are electrically connected, and the first liquid inlet/outlet and the second liquid inlet/outlet that are connected. The power battery is electrically connected to the vehicle-end charging output interface, and is electrically connected to the charging device through the vehicle-end charging input interface, so that the charging device can charge the power battery by using the vehicle-mounted charging connection apparatus. In addition, the thermal management system is connected to the second liquid inlet/outlet through the cooling liquid inlet pipeline and the cooling liquid outlet pipeline, and is connected to the off-vehicle liquid cooling device through the first liquid inlet/outlet, so that the off-vehicle liquid cooling device can transmit the liquid-phase cooling medium to the thermal management system via the vehicle-mounted charging connection apparatus to cool the charged power battery. This helps meet a heat dissipation requirement of the power battery during high-power charging, facilitates high-power charging of the electric vehicle by the charging device, and shortens charging duration of the electric vehicle.

With reference to the first aspect, in some implementations of the first aspect, each vehicle-end charging input interface includes a vehicle-end direct current interface and a vehicle-end charging connection confirm CC interface. The first liquid inlet/outlet includes a first liquid inlet interface, a first liquid outlet interface, and a vehicle-end cooling CC interface. The second liquid inlet/outlet includes a second liquid inlet interface and a second liquid outlet interface. The vehicle-end direct current interface is configured to transmit, to the vehicle-end charging output interface, the direct current output by the charging device. A voltage signal of the vehicle-end charging CC interface indicates a status of connection between the vehicle-end charging input interface and the charging device. The first liquid inlet interface is connected to the second liquid outlet interface, and the second liquid outlet interface is connected to one end of the cooling liquid inlet pipeline, to transmit a liquid-phase cooling medium in the off-vehicle liquid cooling device to the cooling liquid inlet pipeline. The first liquid outlet interface is connected to the second liquid inlet interface, and the second liquid inlet interface is connected to one end of the cooling liquid outlet pipeline, to transmit the liquid-phase cooling medium in the cooling liquid outlet pipeline to the off-vehicle liquid cooling device. A voltage signal of the vehicle-end cooling CC interface indicates a status of connection between the first liquid inlet/outlet and the off-vehicle liquid cooling device.

In this embodiment of this application, the vehicle-end charging CC interface is disposed in the vehicle-end charging input interface, and the vehicle-end cooling CC interface is disposed in the first liquid inlet/outlet, so that the vehicle-mounted charging connection apparatus can determine, based on the voltage signals of the corresponding CC interfaces, the status of connection between the vehicle-end charging input interface and the charging device, and the status of connection between the vehicle-end liquid inlet/outlet and the off-vehicle liquid cooling device. In this way, when the vehicle-end charging input interface is connected to the charging device and the vehicle-end liquid inlet/outlet is connected to the off-vehicle liquid cooling device, the vehicle-mounted charging connection apparatus can transmit a direct current output by the charging device at a high power to the power battery, and transmit the liquid-phase cooling medium transmitted by the liquid cooling device to the thermal management system for the power battery to cool the power battery, to help meet a heat dissipation requirement of the power battery during high-power charging, and facilitate high-power charging of the electric vehicle by the charging device.

With reference to the first aspect, in some implementations of the first aspect, the vehicle-mounted charging connection apparatus further includes a liquid inlet pipeline, a heat exchange structure, and a liquid outlet pipeline. The liquid inlet pipeline is configured to transmit, to the second liquid outlet interface, the liquid-phase cooling medium that is in the off-vehicle liquid cooling device and that is received through the first liquid inlet interface. The heat exchange structure is connected to the liquid inlet pipeline, and the heat exchange structure is configured to exchange heat with the vehicle-end direct current interface and a power transmission cable electrically connected to the vehicle-end direct current power supply interface. The liquid outlet pipeline is configured to transmit, to the first liquid outlet interface, the liquid-phase cooling medium that is in the cooling liquid outlet pipeline and that is received through the second liquid inlet interface.

In this embodiment of this application, the vehicle-mounted charging connection apparatus transmits, through the liquid inlet pipeline, the liquid-phase cooling medium transmitted by the off-vehicle liquid cooling device to the thermal management system for the power battery, and the heat exchange structure is connected to the liquid inlet pipeline, so that the heat exchange structure can perform, through the transmitted liquid-phase cooling medium, heat exchange on the vehicle-end direct current interface for transmitting the direct current in the vehicle-mounted charging connection apparatus and a power transmission cable for transmitting the direct current, to cool the vehicle-end direct current interface and the power transmission cable for transmitting the direct current. This helps meet a heat dissipation requirement of the power battery during high-power charging, and facilitates high-power charging of the electric vehicle by the charging device.

With reference to the first aspect, in some implementations of the first aspect, the vehicle-mounted charging connection apparatus further includes a heating liquid inlet pipeline. The heating liquid inlet pipeline is configured to transmit, to the second liquid outlet interface, a liquid-phase heating medium that is in the off-vehicle liquid cooling device and that is received through the first liquid inlet interface.

In this embodiment of this application, based on an actual application requirement, the off-vehicle liquid cooling device can further transmit the liquid-phase heating medium to the thermal management system for the power battery via the vehicle-mounted charging connection apparatus, to heat the power battery via the thermal management system for the power battery.

### BRIEF DESCRIPTION OF DRAWINGS

FIG. 1 is a diagram of a structure of a charging system according to an embodiment of this application;
FIG. 2 is a diagram of a structure of a charging system according to an embodiment of this application;
FIG. 3 is a diagram of a structure of a charging system according to an embodiment of this application;
FIG. 4 is a diagram of a structure of an electric vehicle including a vehicle-mounted charging connection apparatus according to an embodiment of this application;
FIG. 5 is a diagram of a structure of an electric vehicle including a vehicle-mounted charging connection apparatus according to an embodiment of this application;
FIG. 6 is a diagram of a structure of an electric vehicle in which a pipeline structure for transmitting a liquid-phase heating medium is separately disposed between a first liquid inlet/outlet and a second liquid inlet/outlet according to an embodiment of this application;
FIG. 7 is a diagram of a structure of connection between a vehicle-mounted charging connection apparatus, a power battery, and a thermal management system according to an embodiment of this application;
FIG. 8 is a diagram of a structure of a power battery according to an embodiment of this application;
FIG. 9 is a diagram of a structure of connection between a vehicle-mounted charging connection apparatus, a power battery, and a thermal management system according to an embodiment of this application;
FIG. 10 is a diagram of a structure of connection between a vehicle-mounted charging connection apparatus, a power battery, and a thermal management system according to an embodiment of this application;
FIG. 11 is a diagram of a structure of connection between a vehicle-mounted charging connection apparatus, a power battery, and a thermal management system according to an embodiment of this application;
FIG. 12 is a diagram of a structure of a charging pile according to an embodiment of this application;
FIG. 13 is a diagram of a structure of a device body according to an embodiment of this application;
FIG. 14 is a diagram of a structure of a device body according to an embodiment of this application;
FIG. 15 is a diagram of a structure of a specific circuit for determining a status of connection between a vehicle-mounted charging connection apparatus and a charging pile according to an embodiment of this application;
FIG. 16 is a diagram of a structure of a specific circuit for determining a status of connection between a vehicle-mounted charging connection apparatus and a charging pile according to an embodiment of this application;
FIG. 17 is a schematic flowchart of a charging method according to an embodiment of this application;
FIG. 18A and FIG. 18B are a schematic flowchart of a charging method according to an embodiment of this application;
FIG. 19 is a schematic flowchart of a charging method according to an embodiment of this application; and
FIG. 20 is a schematic flowchart of a charging method according to an embodiment of this application.

### DESCRIPTION OF EMBODIMENTS

Before embodiments of this application are described, the following several descriptions are first provided.

In descriptions of embodiments of this application, an "electrical connection" may be a manner of a direct electrical connection or an indirect electrical connection between two electrical elements to implement signal transmission. For example, that A is connected to B may be understood as that A is directly electrically connected to B, or may be understood as that A is indirectly connected to B via one or more other electrical elements.

In the descriptions of embodiments of this application, unless otherwise specified, "and/or" describes only an association relationship between associated objects and indicates that three relationships may exist. For example, A and/or B may represent the following three cases: Only A exists, both A and B exist, and only B exists.

Prefix words "first", "second", and the like in embodiments of this application are merely intended to distinguish between different described objects, and impose no limitation on locations, sequences, priorities, quantities, content, or the like of the described objects. In embodiments of this application, use of the prefix words, for example, ordinal numbers, used to distinguish between the described objects does not constitute a limitation on the described objects. For descriptions of the described objects, refer to the descriptions of the context in the claims or embodiments. The use of such prefix words should not constitute a redundant limitation. In addition, in the descriptions of embodiments, unless otherwise specified, "a plurality of" means two or more.

The following explains technical terms that may appear in embodiments of this application.

A connection confirm (connection confirm, CC) signal is a functional signal that indicates, in an electronic or mechanical manner, a status in which a vehicle plug is electrically connected to an electric vehicle and/or a power supply plug is electrically connected to a charging device. An interface used to transmit a CC signal is referred to as a CC interface. For an electric vehicle that is charged with a direct current, interfaces for transmitting a CC signal are further classified into two interfaces: a CC1 interface and a CC2 interface. The CC1 interface is for a connection confirm signal on a charging pile side, and the CC2 interface is for a connection confirm signal on a vehicle side.

A battery management system (battery management system, BMS) is a control system that protects use safety of a power battery in an electric vehicle, and monitors a use status of the power battery. It mitigates inconsistency of power batteries through a necessary measure, to provide safety assurance for use of the power battery.

A thermal management system (thermal management system, TMS) is an important part of an electric vehicle, and mainly includes three parts: an air conditioning thermal management system, an electrode and electrical control cooling system, and a battery thermal management system. The TMS is used to provide required cold and heat for a passenger compartment, a battery, a motor, an air conditioner, and the like, to perform thermal management on these managed objects, so as to keep temperatures of these managed objects within a normal operating range.

The following describes technical solutions of this application with reference to accompanying drawings.

First, for ease of understanding the technical solutions provided in embodiments of this application, the following first describes application scenarios to which embodiments of this application are applicable.

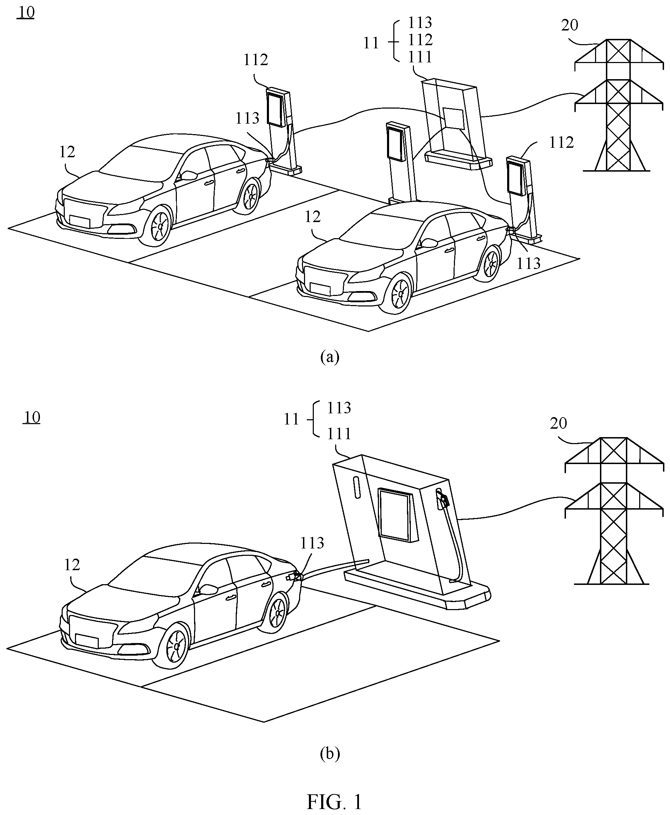

FIG. 1 is a diagram of a structure of a charging system 10 according to an embodiment of this application.

With reference to (a) and (b) in FIG. 1, the charging system 10 may include a charging device 11 and an electric vehicle 12.

In some embodiments, as shown in (a) in FIG. 1, the charging device 11 may be a split-type charging device. Specifically, the charging device 11 may include a charging power unit 111, at least one charging dispenser 112, and at least one charging connector 113. The charging power unit 111 is electrically connected to each charging dispenser 112, each charging dispenser 112 is electrically connected to a charging connector 113 through a cable, and the charging connector 113 is configured to electrically connect to the electric vehicle 12.

The charging power unit 111 includes a plurality of power conversion apparatuses. The plurality of power conversion apparatuses may convert an alternating current from an external power grid 20 into a stable direct current, then transmit the stable direct current to the charging dispenser 112, and transmit the stable direct current to the electric vehicle 12 via the charging connector 113 electrically connected to the charging dispenser 112. The plurality of power conversion apparatuses may include, for example, an alternating current-direct current (alternating current-direct current, AC-DC) conversion apparatus and a direct current-direct current (direct current-direct current, DC-DC) conversion apparatus.

During specific implementation, a user may insert the charging connector 113 into a charging interface of the electric vehicle 12, so that the charging connector 113 is electrically connected to a BMS (not shown in the figure) in the electric vehicle 12, and the charging power unit 111 may charge a power battery in the electric vehicle 12 via the charging connector 113.

The charging dispenser 112 may include a housing, a human-machine interaction interface, a charging control unit, a metering and billing unit, and the like, and is configured to perform information exchange, energy transmission, metering and billing, and the like with the electric vehicle 12.

The electric vehicle 12 may be a transportation vehicle driven by electric energy to run. The electric vehicle 12 may be, for example, a pure electric vehicle (pure electric vehicle/battery electric vehicle, pure EV/battery EV), a hybrid electric vehicle (hybrid electric vehicle, HEV), a range extended electric vehicle (range extended electric vehicle, REEV), or a plug-in hybrid electric vehicle (plug-in hybrid electric vehicle, PHEV).

In some other embodiments, as shown in (b) in FIG. 1, the charging device 11 may be an integrated charging device. Specifically, the charging device 11 may include only a charging power unit 111 and at least one charging connector 113 electrically connected to the charging power unit 111, and does not include a charging dispenser 112. A human-machine interaction interface, a charging control unit, a metering and billing unit, and the like may be directly disposed in the charging power unit 111. A plurality of power conversion apparatuses in the charging power unit 111 convert an alternating current from an external power grid 20 into a stable direct current, and then directly transmits the stable direct current to the electric vehicle 12 via the charging connector 113.

In the foregoing charging system 10, with development of high-rate charging technologies for power batteries and a higher requirement of the user on a charging time of the electric vehicle 12, charging the electric vehicle 12 by the charging device 11 at a high power has become a future development trend. For example, the charging device 11 performs short-time fast charging or ultra-fast charging on the power battery in the electric vehicle 12. However, in current actual application, when the charging device 11 charges the power battery at a high power, heat generated by the power battery greatly increases accordingly. If the heat cannot be eliminated in time, the charging device 11 cannot normally charge the power battery at a high power.

The electric vehicle 12 usually has a thermal management system that can provide cold required for heat dissipation of the power battery. However, as a charging power increases, for example, in an ultra-fast charging scenario, the power battery generates more heat, effect of cooling only via the thermal management system is very limited , and a cooling capability of the thermal management system cannot meet a heat dissipation requirement of the power battery during high-power charging.

Currently, for some electric vehicles 12, a cooling system is additionally added, to cool a power battery when the power battery is charged at a high power, so as to increase a power, of the electric vehicle 12, of cooling the power battery when the power battery is charged at the high power. However, the foregoing additionally added cooling system not only occupies space of the electric vehicle 12, but also increases a weight and manufacturing costs of the entire vehicle, and makes development of a vehicle system of the electric vehicle 12 more difficult. In addition, the additionally added cooling system works when the power battery is charged at a high power, and is in an idle state in other working conditions. Therefore, utilization of the cooling system is low.

Based on the foregoing content, embodiments of this application provide a vehicle-mounted charging connection apparatus, an electric vehicle, a charging pile, a charging system, and a charging method, to use the vehicle-mounted charging connection apparatus to enable a power battery in the electric vehicle to be cooled via a liquid cooling device disposed in the charging pile while the electric vehicle is charged at a high power via a charging device in the charging pile, so as to meet a heat dissipation requirement of the power battery during high-power charging, and facilitate high-power charging of the electric vehicle by the charging pile.

The following describes in detail the vehicle-mounted charging connection apparatus, the electric vehicle, the charging pile, and the charging system that are provided in embodiments of this application with reference to the accompanying drawings. It should be noted that, for ease of understanding, in the accompanying drawings provided in embodiments of this application, a solid line represents a power transmission line, a short dashed line represents a pipeline connection line, and a long dashed line represents a signal transmission line.

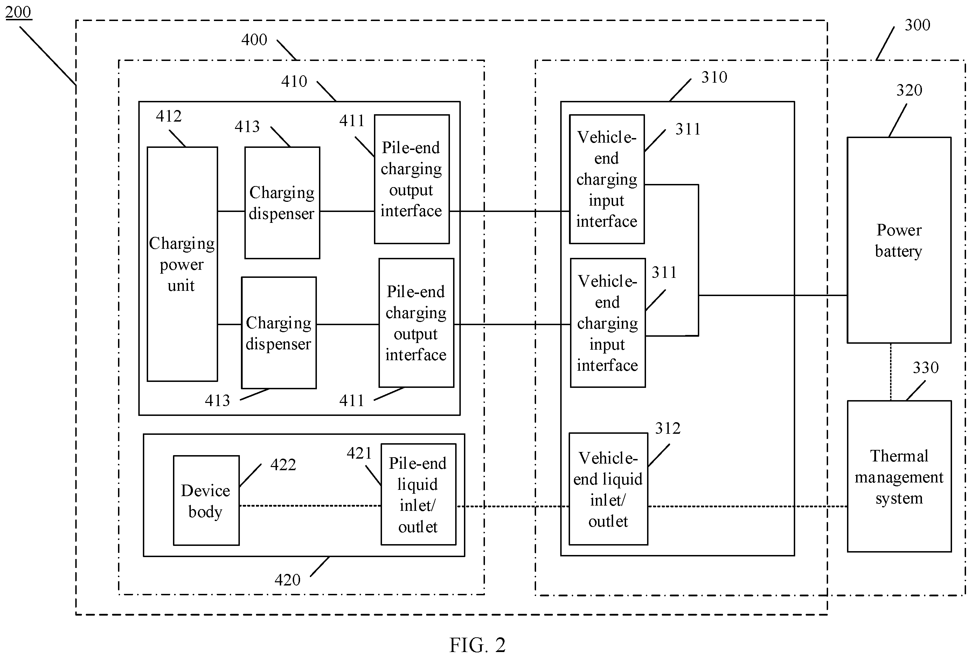

FIG. 2 is a diagram of a structure of a charging system 200 according to an embodiment of this application.

Refer to FIG. 2. The charging system 200 may include a vehicle-mounted charging connection apparatus 310 and a charging pile 400.

The vehicle-mounted charging connection apparatus 310 may include a vehicle-end charging input interface 311 and a vehicle-end liquid inlet/outlet 312. The charging pile 400 may include a charging device 410 and a liquid cooling device 420. The charging device 410 may include a charging power unit 412 and a pile-end charging output interface 411 electrically connected to the charging power unit 412. The liquid cooling device 420 may include a pile-end liquid inlet/outlet 421.

The charging power unit 412 may include a plurality of power conversion apparatuses. The plurality of power conversion apparatuses may convert an alternating current from an external power grid into a stable direct current, and then transmit the stable direct current to the pile-end charging output interface 411. The pile-end charging output interface 411 may be configured to electrically connect to the vehicle-end charging input interface 311, so that the plurality of power conversion apparatuses output the direct current to the vehicle-end charging input interface 311. The pile-end liquid inlet/outlet 421 may be configured to connect to the vehicle-end liquid inlet/outlet 312, to transmit a liquid-phase cooling medium transmitted in the liquid cooling device 420 to the vehicle-end liquid inlet/outlet 312.

During specific implementation, the vehicle-mounted charging connection apparatus 310 may be used in an electric vehicle 300. The electric vehicle 300 includes a power battery 320 and a thermal management system 330 for the power battery (referred to as a thermal management system 330 below). The thermal management system 330 may be connected to the power battery 320 through a pipeline, to cool the power battery 320. The vehicle-end charging input interface 311 in the vehicle-mounted charging connection apparatus 310 may be electrically connected to the power battery 320, to transmit the direct current output by the plurality of power conversion apparatuses to the power battery 320, so as to charge the power battery 320. The vehicle-end liquid inlet/outlet 312 may be connected to the thermal management system 330 through a pipeline, so as to transmit the liquid-phase cooling medium in the liquid cooling device 420 to the thermal management system 330 through the vehicle-end liquid inlet/outlet 312, so that the thermal management system 330 can cool the power battery 320 via the liquid cooling device 420.

It may be understood that the charging device 410 may be the split-type charging apparatus shown in (a) in FIG. 1, or the integrated charging apparatus shown in (b) in FIG. 1. For ease of description and understanding, in this embodiment of this application, an example in which the charging device 410 is the split-type charging apparatus shown in (a) in FIG. 1 is used for description.

Specifically, refer to FIG. 2. The charging device 410 may further include at least one charging dispenser 413 electrically connected to the charging power unit 412. Each charging dispenser 413 may be electrically connected to a charging connector (not shown in the figure) through a cable. The pile-end charging output interface 411 may be a charging plug disposed in the charging connector. Correspondingly, the vehicle-end charging input interface 311 may be a charging socket disposed in the vehicle-mounted charging connection apparatus 310, and is configured to be inserted by the pile-end charging output interface 411 in the charging connector.

For specific descriptions of the charging device 410, refer to the embodiment shown in FIG. 1. Details are not described herein again.

It may be further understood that the liquid cooling device 420 may be disposed outside the charging device 410, or may be integrated into the charging device 410.

For example, in some embodiments, as shown in FIG. 2, the liquid cooling device 420 is disposed outside the charging device 410. The liquid cooling device 420 may include a device body 422 and a liquid cooling connector (not shown in the figure) connected to the device body 422 through a pipeline. The device body 422 may include a cooling system of the liquid cooling device 420, where a liquid-phase cooling medium in the cooling system is transmitted to the liquid cooling connector through the pipeline, and the pile-end liquid inlet/outlet 421 may be a liquid cooling plug disposed in the liquid cooling connector. Correspondingly, the vehicle-end liquid inlet/outlet 312 may be a liquid cooling socket disposed in the vehicle-mounted charging connection apparatus 310, and is configured to be inserted by the pile-end liquid inlet/outlet 421 in the liquid cooling connector.

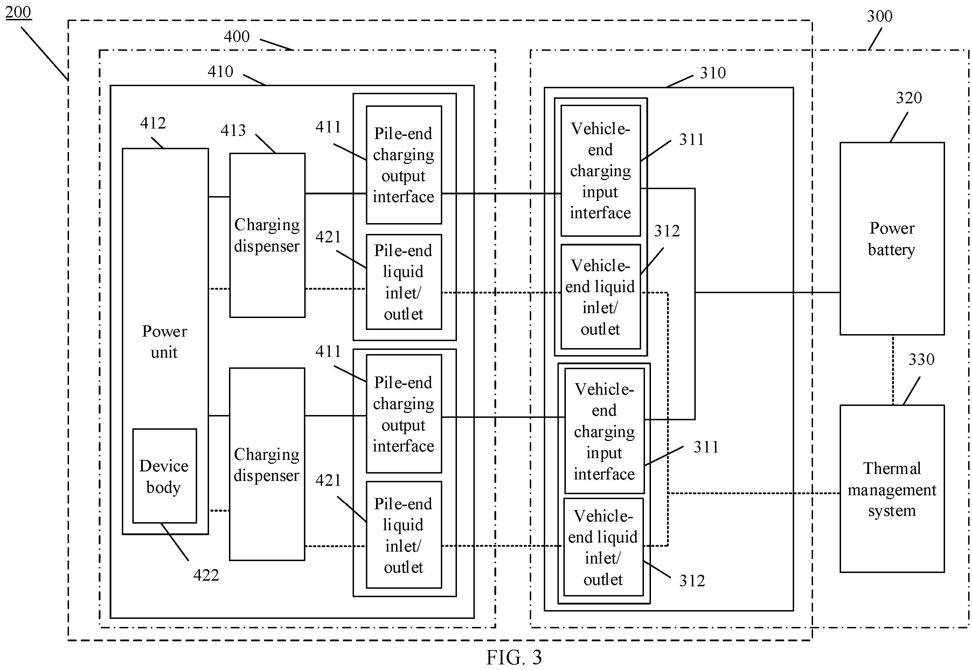

In some other embodiments, FIG. 3 is a diagram of another structure of the charging system 200 according to an embodiment of this application. In the embodiment shown in FIG. 3, the device body 422 of the liquid cooling device 420 may be integrated into the charging power unit 412 of the charging device 410. In this case, the charging power unit 412 may be connected to a composite connector integrating charging and cooling, and the pile-end charging output interface 411 and the pile-end liquid inlet/outlet 421 may be a composite plug disposed in the composite connector. Correspondingly, the vehicle-end charging input interface 311 and the vehicle-end liquid inlet/outlet 312 may be a composite socket disposed in the vehicle-mounted charging connection apparatus 310, and is configured to be inserted by the composite plug in the foregoing composite connector.

It should be understood that, for ease of description and understanding, in this embodiment of this application, an example in which the liquid cooling device 420 is disposed outside the charging device 410 is used for description.

In this embodiment of this application, the vehicle-mounted charging connection apparatus 310 has the vehicle-end charging input interface 311 configured to electrically connect to the charging device 410, and the vehicle-end liquid inlet/outlet 312 connected to the liquid cooling device 420. When the vehicle-mounted charging connection apparatus 310 is used in the electric vehicle 300, the electric vehicle 300 can be directly connected to both the charging device 410 and the liquid cooling device 420 via the vehicle-mounted charging connection apparatus 310. In this way, the power battery 320 in the electric vehicle 300 can be cooled via an off-vehicle liquid cooling device 420 while the electric vehicle 300 is charged at a high power via the charging device 410, to meet a heat dissipation requirement of the power battery 320 during high-power charging, and facilitate high-power charging of the electric vehicle 300 by the charging device 410. In addition, the vehicle-end charging input interface 311 and the vehicle-end liquid inlet/outlet 312 are disposed in the vehicle-mounted charging connection apparatus 310, to reduce difficulty in reconstructing the entire electric vehicle 300 and reduce reconstruction costs.

In addition, the power battery 320 is cooled via the off-vehicle liquid cooling device 420, so that no cooling system of the power battery 320 needs to be additionally added to the electric vehicle 300. This avoids an increase in a weight of the entire vehicle, thereby helping reduce manufacturing costs of the electric vehicle 300 and difficulty in system development of the entire vehicle.

The following separately describes in detail the vehicle-mounted charging connection apparatus 310 and the charging pile 400 in the charging system 200.

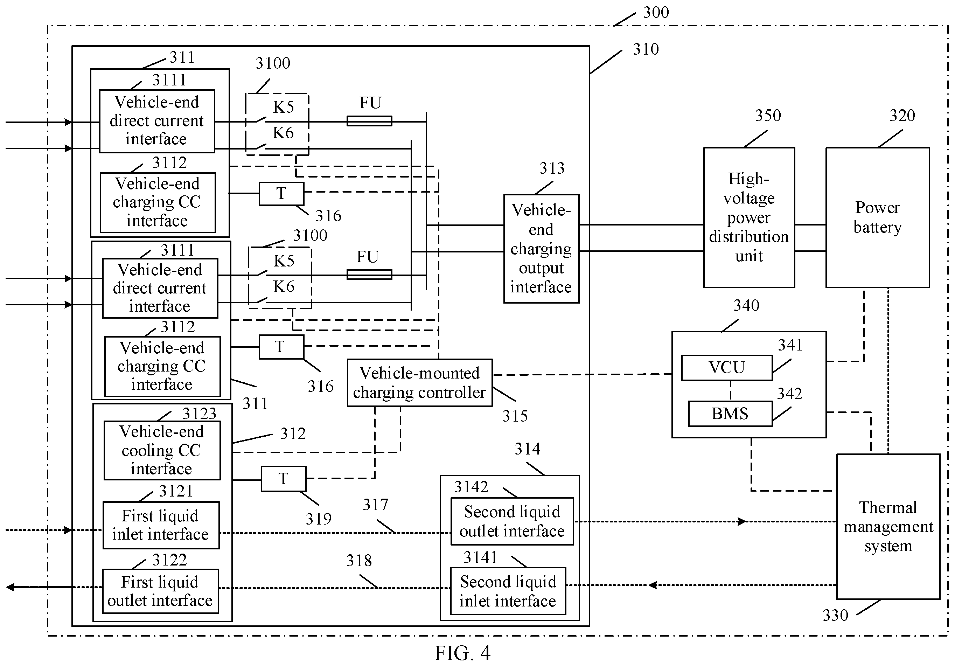

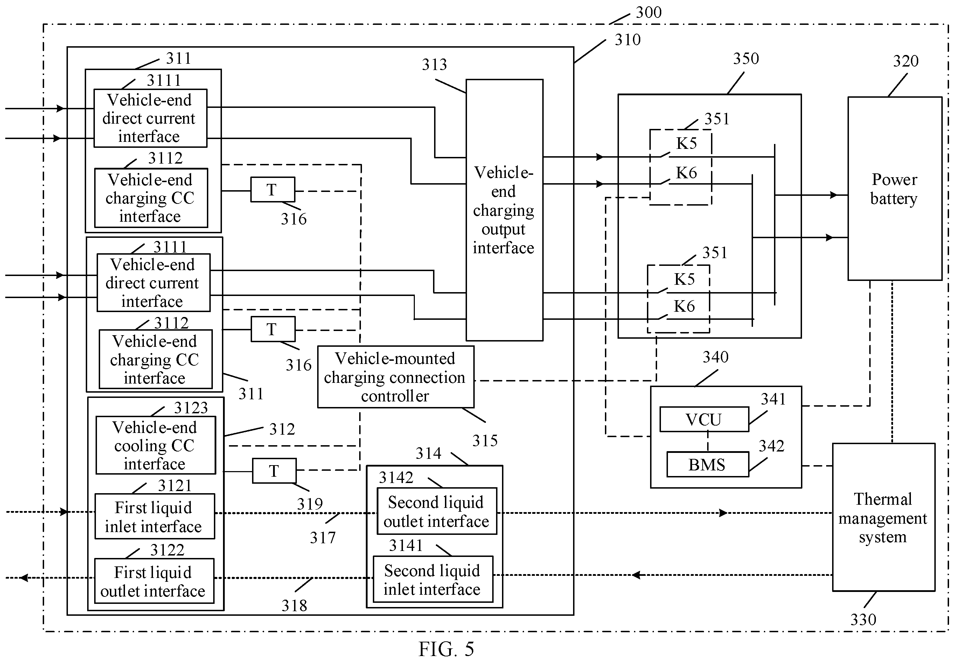

FIG. 4 and FIG. 5 each are a diagram of a structure of the electric vehicle 300 including the vehicle-mounted charging connection apparatus 310 according to embodiments of this application.

With reference to FIG. 4 and FIG. 5, the electric vehicle 300 may include the vehicle-mounted charging connection apparatus 310, the power battery 320, and the thermal management system 330.

The vehicle-mounted charging connection apparatus 310 includes at least one vehicle-end charging input interface 311, a vehicle-end charging output interface 313, a first liquid inlet/outlet 312, and a second liquid inlet/outlet 314. Each vehicle-end charging input interface 311 is electrically connected to the vehicle-end charging output interface 313, the vehicle-end charging input interface 311 may be configured to electrically connect to the charging device 410, for example, may be electrically connected to the pile-end charging output interface 411 of the charging device 410 shown in FIG. 2, and the vehicle-end charging output interface 313 may be configured to electrically connect to the power battery 320, so that the charging device 410 can charge the power battery 320 via the vehicle-mounted charging connection apparatus 310.

The first liquid inlet/outlet 312 is connected to the second liquid inlet/outlet 314 through a pipeline, the first liquid inlet/outlet 312 may be configured to connect to an off-vehicle liquid cooling device, for example, may be connected to the pile-end liquid inlet/outlet 421 of the liquid cooling device 420 shown in FIG. 2, and the second liquid inlet/outlet 314 may be configured to connect to the thermal management system 330, so that the off-vehicle liquid cooling device can transmit a liquid-phase cooling medium to the thermal management system 330 via the vehicle-mounted charging connection apparatus 310, and the thermal management system 330 cools the power battery 320 by using the liquid-phase cooling medium transmitted by the liquid cooling device 420.

It may be understood that, in this embodiment of this application, the first liquid inlet/outlet 312 may be the vehicle-end liquid inlet/outlet 312 shown in FIG. 2 and FIG. 3.

In this embodiment of this application, the vehicle-end charging input interface 311, the vehicle-end charging output interface 313, the first liquid inlet/outlet 312, and the second liquid inlet/outlet 314 are disposed in the vehicle-mounted charging connection apparatus 310, so that the power battery 320 in the electric vehicle 300 can be connected to the charging device and the off-vehicle liquid cooling device via the vehicle-mounted charging connection apparatus 310. In this way, the power battery 320 can be cooled via the off-vehicle liquid cooling device when the electric vehicle 300 is charged at a high power via the charging device, to meet a heat dissipation requirement of the power battery 320 during high-power charging, and facilitate high-power charging of the electric vehicle 300.

In some embodiments, there may be one or more vehicle-end charging input interfaces 311 and one or more first liquid inlets/outlets 312. In an example, there are a plurality of vehicle-end charging input interfaces 311 and one first liquid inlet/outlet 312. The plurality of vehicle-end charging input interfaces 311 may be a plurality of charging sockets, and the first liquid inlet/outlet 312 may be a liquid cooling socket. In another example, there may be a plurality of vehicle-end charging input interfaces 311 and a plurality of first liquid inlets/outlets 312 that are in a one-to-one correspondence, and each vehicle-end charging input interface 311 and a corresponding first liquid inlet/outlet 312 may be integrated into one composite socket.

For ease of description and understanding, in this embodiment of this application, an example in which there are a plurality of vehicle-end charging input interfaces 311 and one first liquid inlet/outlet 312 is used for description.

In this embodiment of this application, a quantity of vehicle-end charging input interfaces 311 on the vehicle-mounted charging connection apparatus 310 and a quantity of first liquid inlets/outlets 312 on the vehicle-mounted charging connection apparatus 310 may be flexibly set, to meet different production and design requirements. In addition, a design of the quantity of vehicle-end charging input interfaces 311 and the quantity of first liquid inlets/outlets 312 is related only to a rectification design of the vehicle-mounted charging connection apparatus 310, and the entire electric vehicle 300 is slightly changed. This helps reduce difficulty and a period of development of the electric vehicle 300.

Still refer to FIG. 4. In some embodiments, each vehicle-end charging input interface 311 may include a vehicle-end direct current interface 3111 and a vehicle-end charging CC interface 3112, to ensure that the charging device 410 normally charges the electric vehicle 300. Each vehicle-end direct current interface 3111 is electrically connected to the vehicle-end charging output interface 313 through a positive direct current power transmission cable and a negative direct current power transmission cable, to perform power transmission. A voltage signal of the vehicle-end charging CC interface 3112 may indicate a status of connection between the vehicle-end charging input interface 311 and the charging device 410, for example, may indicate a status of connection between the vehicle-end charging input interface 311 and the pile-end charging output interface 411 of the charging device 410 shown in FIG. 2.

It may be understood that the voltage signal of the vehicle-end charging CC interface 3112 may be a voltage value of the vehicle-end charging CC interface 3112, and different voltage values indicate different states of connection between the vehicle-end charging input interface 311 and the pile-end charging output interface 411.

During specific implementation, in some embodiments, the vehicle-mounted charging connection apparatus 310 may further include a vehicle-mounted charging connection controller 315, and the vehicle-mounted charging connection controller 315 may be electrically connected to the vehicle-end charging CC interface 3112. The vehicle-mounted charging connection controller 315 may be configured to: detect the voltage signal of the vehicle-end charging CC interface 3112, and determine a status of connection between the vehicle-end charging input interface 3112 and the charging device 410 based on the voltage signal of the vehicle-end charging CC interface 3112.

For example, when detecting that the voltage value of the vehicle-end charging CC interface 3112 is 0, the vehicle-mounted charging connection controller 315 may determine that the vehicle-end charging input interface 311 is not connected to the pile-end charging output interface 411; or when detecting that the voltage value of the vehicle-end charging CC interface 3112 is 6 V, the vehicle-mounted charging connection controller 315 may determine that the vehicle-end charging input interface 311 is connected to the pile-end charging output interface 411.

It may be understood that, in this embodiment of this application, the vehicle-mounted charging connection controller 315 may be, for example, any one of a central processing unit (central processing unit, CPU), a network processor (network processor, NP), a digital signal processor (digital signal processor, DSP), a micro control unit (micro controller unit, MCU), and a programmable controller (programmable logic device, PLD).

Still refer to FIG. 4. Similarly, in some embodiments, to ensure that the vehicle-mounted charging connection apparatus 310 normally receives the liquid-phase cooling medium transmitted by the liquid cooling device 420, the first liquid inlet/outlet 312 may include a first liquid inlet interface 3121, a first liquid outlet interface 3122, and a vehicle-end cooling CC interface 3123, and the second liquid inlet/outlet 314 may include a second liquid inlet interface 3141 and a second liquid outlet interface 3142.

The first liquid inlet interface 3121 is connected to the second liquid outlet interface 3142, the first liquid outlet interface 3122 is connected to the second liquid inlet interface 3141, and the second liquid outlet interface 3142 and the second liquid inlet interface 3141 may be separately connected to the thermal management system 330. The first liquid inlet interface 3121 is configured to: receive the liquid-phase cooling medium transmitted by the liquid cooling device 420, and transmit the liquid-phase cooling medium to the thermal management system 330 through the second liquid outlet interface 3142, so that the liquid-phase cooling medium can exchange heat with the power battery 320 via the thermal management system 330 to cool the power battery 320. The liquid-phase cooling medium in the thermal management system 330 may be transmitted to the vehicle-mounted charging connection apparatus 310 through the second liquid inlet interface 3141, and further transmitted to the liquid cooling device 420 through the first liquid outlet interface 3131, to form a cooling cycle of the liquid-phase cooling medium for the power battery 320. A voltage signal of the vehicle-end cooling CC interface 3123 may indicate a status of connection between the first liquid inlet/outlet 312 and the liquid cooling device 420, for example, may indicate a status of connection between the first liquid inlet/outlet 312 and the pile-end liquid inlet/outlet 421 of the liquid cooling device 420 shown in FIG. 4.

During specific implementation, in some embodiments, the vehicle-mounted charging connection controller 315 may be configured to: detect the voltage signal of the vehicle-end cooling CC interface 3123, and determine the status of connection between the first liquid inlet/outlet 312 and the liquid cooling device 420 based on the voltage signal of the vehicle-end cooling CC interface 3123.

It may be understood that, similar to the voltage signal of the vehicle-end charging CC interface 3112, the voltage signal of the vehicle-end cooling CC interface 3123 may be a voltage value of the vehicle-end cooling CC interface 3123, and different voltage values indicate different states of connection between the first liquid inlet/outlet 312 and the pile-end liquid inlet/outlet 421. For example, when the vehicle-mounted charging connection controller 315 detects that the voltage value of the vehicle-end cooling CC interface 3123 is 0, it may indicate that the first liquid inlet/outlet 312 is not connected to the pile-end liquid inlet/outlet 421; or when the vehicle-mounted charging connection controller 315 detects that the voltage value of the vehicle-end cooling CC interface 3123 is 4 V, it may indicate that the first liquid inlet/outlet 312 is connected to the pile-end liquid inlet/outlet 421.

It may be understood that the foregoing determining, respectively based on the vehicle-end charging CC interface 3112 and the vehicle-end cooling CC interface 3123, the status of connection between the vehicle-end charging input interface 311 and the pile-end charging output interface 411 and the status of connection between the first liquid inlet/outlet 312 and the pile-end liquid inlet/outlet 421 is described in detail below. Details are not described herein.

Still refer to FIG. 4. In some embodiments, the vehicle-mounted charging connection apparatus 310 may further include a charging loop contactor 3100. The charging loop contactor 3100 is electrically connected between each vehicle-end direct current interface 3111 and the vehicle-end charging output interface 313. Specifically, the charging loop contactor 3100 may include charging loop contactors K5 and K6, and the charging loop contactors K5 and K6 are respectively electrically connected to the positive direct current power transmission cable and the negative direct current power transmission cable that are between the vehicle-end direct current interface 3111 and the vehicle-end charging output interface 313.

The charging loop contactor 3100 may be configured to disconnect or connect a power transmission loop between the vehicle-end direct current interface 3111 and the power battery 320 that are electrically connected to the charging loop contactor 3100. During specific implementation, the vehicle-mounted charging connection controller 315 may be electrically connected to the charging loop contactor 3100, and is configured to control an on/off state of the charging loop contactor 3100, to disconnect or connect the power transmission loop between the vehicle-end direct current interface 3111 and the power battery 320 that are electrically connected to each other.

For example, the vehicle-mounted charging connection controller 315 may be configured to: in response to connection between the vehicle-end charging input interface 311 and the charging device 410, control the charging loop contactor 3100 electrically connected to the vehicle-end direct current interface 3111 of the vehicle-end charging input interface 311 to be turned on, to connect the power transmission loop between the vehicle-end direct current interface 3111 and the power battery 320.

In this embodiment of this application, the power transmission loop between the charging device 410 and the power battery 320 is disconnected or connected via the charging loop contactor 3100 disposed in the vehicle-mounted charging connection apparatus 310, and the charging loop contactor 3100 may be controlled by the vehicle-mounted charging connection apparatus 310. This helps reduce a change to a charging control function of the electric vehicle 300 caused by the plurality of vehicle-end charging input interfaces 311 disposed in the vehicle-mounted charging connection apparatus 310, so that the entire electric vehicle 300 is slightly changed. This helps reduce difficulty and a period of development of the electric vehicle 300.

In an example, the vehicle-mounted charging connection apparatus 310 further includes a fuse FU, to perform short-circuit protection on the power transmission loop between the vehicle-end direct current interface 3111 and the vehicle-end charging output interface 313. The fuse FU and the charging loop contactor 3100 may be connected in series between each vehicle-end direct current interface 3111 and the vehicle-end charging output interface 313. The fuse FU may be configured to: when a current transmitted to the fuse FU is greater than a preset current, disconnect the power transmission loop between the vehicle-end direct current interface 3111 and the vehicle-end charging output interface 313 that are electrically connected to the fuse FU.

Optionally, the fuse FU may be electrically connected to the positive direct current power transmission cable, or electrically connected to the negative direct current power transmission cable.

In some other embodiments, as shown in FIG. 5, the electric vehicle 300 may further include a power distribution unit 350. The power distribution unit 350 may be electrically connected between the vehicle-end charging output interface 313 and the power battery 320. The charging loop contactor 3100 may not be disposed in the vehicle-mounted charging connection apparatus 310, and the power transmission loop between the charging device 410 and the power battery 320 may be disconnected or connected via a charging loop contactor 351 disposed in the power distribution unit 350.

Specifically, refer to FIG. 5. The power distribution unit 350 may include the charging loop contactor 351. The vehicle-end direct current interface 3111 of each vehicle-end charging input interface 311 is electrically connected to the vehicle-end charging output interface 313 through the positive direct current power transmission cable and the negative direct current power transmission cable, and is further electrically connected to the power battery 320 via the charging loop contactor 351 in the power distribution unit 350. Specifically, the charging loop contactor 351 may include charging loop contactors K5 and K6, and the charging loop contactors K5 and K6 are respectively electrically connected to the positive direct current power transmission cable and the negative direct current power transmission cable that are between the vehicle-end charging output interface 313 and the power battery 320.

It may be understood that, in this embodiment of this application, compared with the case in which the charging loop contactor 3100 is disposed in the vehicle-mounted charging connection apparatus 310, the charging loop contactor 351 disposed in the power distribution unit 350 of the electric vehicle 300 is directly configured to disconnect or connect the power transmission loop between the charging device 410 and the power battery 320. This helps reduce a size of the vehicle-mounted charging connection apparatus 310, and facilitates miniaturization of the vehicle-mounted charging connection apparatus 310.

In some embodiments, as shown in FIG. 5, the vehicle-mounted charging connection controller 315 may be electrically connected to the charging loop contactor 351, and is configured to control an on/off state of the charging loop contactor 351, to disconnect or connect a power transmission loop between the vehicle-end charging output interface 313 and the power battery 320 that are electrically connected to each other.

In some other embodiments, as shown in FIG. 5, the electric vehicle 300 may further include a vehicle control system 340. The vehicle control system 340 may include a vehicle control unit (vehicle control unit, VCU) 341 and a battery management system (battery management system, BMS) 342 that are electrically connected to each other. The vehicle control unit 341 may be electrically connected to the charging loop contactor 351, and is configured to control an on/off state of the charging loop contactor 351, to disconnect or connect a power transmission loop between the vehicle-end charging output interface 313 and the power battery 320 that are electrically connected to each other.

It may be understood that, during specific implementation, the vehicle-mounted charging connection apparatus 310 may be communicatively connected to the vehicle control system 340. Specifically, the vehicle-mounted charging connection controller 315 may be communicatively connected to the vehicle control system 340. For example, the vehicle-mounted charging connection controller 315 may be communicatively connected to the vehicle control unit 341 and the battery management system 342 over a controller area network (controller area network, CAN), to exchange signaling when the power battery 320 needs to be charged or the like. For example, the vehicle control unit 341 may receive related information of the power battery 320 sent by the battery management system 342, for example, information such as a charging requirement and a cooling requirement of the power battery 320, and send the obtained related information of the power battery 320 to the vehicle-mounted charging connection controller 315. Alternatively, the battery management system 342 may directly send related information of the power battery 320 to the vehicle-mounted charging connection controller 315.

Still refer to FIG. 4. In some embodiments, the vehicle-mounted charging connection apparatus 310 may further include a vehicle-end direct current interface temperature sensor 316. The vehicle-end direct current interface temperature sensor 316 may be configured to detect at least one of the following temperatures: a temperature of a vehicle-end direct current interface 3111 and a temperature of a power transmission cable electrically connected to the vehicle-end direct current interface 3111.

Specifically, a quantity of vehicle-end direct current interface temperature sensors 316 may be the same as that of vehicle-end charging input interfaces 311, and the vehicle-end direct current interface temperature sensors 316 are in a one-to-one correspondence to the vehicle-end charging input interfaces 311. Each vehicle-end direct current interface temperature sensor 316 may be disposed close to a corresponding vehicle-end direct current interface 3111, and is configured to detect a temperature of the corresponding vehicle-end direct current interface 3111, a temperature of a power transmission cable electrically connected to the vehicle-end direct current interface 3111, a temperature of a charging loop contactor 3100 electrically connected to the power transmission cable, and the like.

During specific implementation, the vehicle-end charging controller 315 may be electrically connected to the vehicle-end direct current interface temperature sensor 316. The vehicle-end charging controller 315 may be configured to obtain the temperature detected by the vehicle-end direct current interface temperature sensor 316, to monitor and generate an alarm in real time for the temperature of the vehicle-end direct current interface 3111, the temperature of the power transmission cable electrically connected to the vehicle-end direct current interface 3111, the temperature of the charging loop contactor 3100 electrically connected to the power transmission cable, and the like.

The foregoing describes the structure of the power transmission loop between the vehicle-end charging input interface 311 and the vehicle-end charging output interface 313 in the vehicle-mounted charging connection apparatus 310. The following describes a pipeline structure connected between the first liquid inlet/outlet 312 and the second liquid inlet/outlet 314 in the vehicle-mounted charging connection apparatus 310.

Still refer to FIG. 4 and FIG. 5. In some embodiments, the vehicle-mounted charging connection apparatus 310 may further include a liquid inlet pipeline 317 and a liquid outlet pipeline 318. Two ends of the liquid inlet pipeline 317 are respectively connected to the first liquid inlet interface 3121 and the second liquid outlet interface 3142, and two ends of the liquid outlet pipeline 318 are respectively connected to the first liquid outlet interface 3122 and the second liquid inlet interface 3141. The liquid inlet pipeline 317 is configured to transmit, to the second liquid outlet interface 3142, the liquid-phase cooling medium transmitted by the liquid cooling device 420 from the first liquid inlet interface 3121, and then the liquid-phase cooling medium is transmitted to the thermal management system 330 by the vehicle-mounted charging connection apparatus 310 through the second liquid outlet interface 3142, so that the liquid-phase cooling medium exchanges heat with the power battery 320 via the thermal management system 330. The liquid outlet pipeline 318 may be configured to transmit, to the liquid cooling device 420 through the first liquid outlet interface 3122, the liquid-phase cooling medium that is in the thermal management system 330 and that is received through the second liquid inlet interface 3141, so that the liquid cooling device 420 can cool the transmitted liquid-phase cooling medium, to form a cooling cycle of the liquid-phase cooling medium in the thermal management system 330.

In some embodiments, when the power battery 320 needs to be heated via the thermal management system 330, the liquid inlet pipeline 317 may be further configured to transmit, to the second liquid outlet interface 3142, a liquid-phase heating medium transmitted by the liquid cooling device 420 from the first liquid inlet interface 3121, and then the liquid-phase heating medium is transmitted to the thermal management system 330, so that the liquid-phase heating medium exchanges heat with the power battery 320 via the thermal management system 330, to heat the power battery 320. The liquid-phase heating medium in the thermal management system 330 may be transmitted to the liquid cooling device 420 through the liquid outlet pipeline 318, so that the liquid cooling device 420 can heat the heat-exchanged liquid-phase cooling medium, to form a heating cycle of the liquid-phase heating medium in the thermal management system 330.

In some other embodiments, a pipeline for transmitting the liquid-phase heating medium may be alternatively separately disposed between the first liquid inlet/outlet 312 and the second liquid inlet/outlet 314.

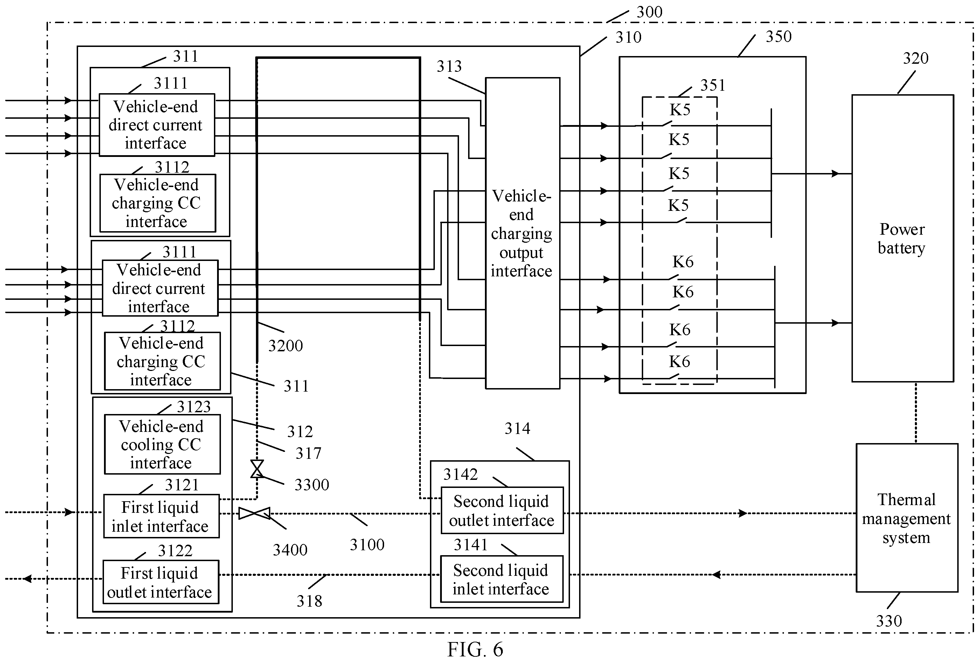

For example, FIG. 6 is a diagram of a structure of the electric vehicle 300 in which a pipeline structure for transmitting the liquid-phase heating medium is separately disposed between the first liquid inlet/outlet 312 and the second liquid inlet/outlet 314 according to an embodiment of this application.

Refer to FIG. 6. Different from the embodiments in FIG. 4 and FIG. 5, in the embodiment in FIG. 6, the vehicle-mounted charging connection apparatus 310 may include the liquid inlet pipeline 317, the liquid outlet pipeline 318, and a heating liquid inlet pipeline 3100. Two ends of the liquid inlet pipeline 317 and two ends of the heating liquid inlet pipeline 3100 may be respectively connected to the first liquid inlet interface 3121 and the second liquid outlet interface 3142. Two ends of the liquid outlet pipeline 318 are respectively connected to the first liquid outlet interface 3122 and the second liquid inlet interface 3141.

The liquid inlet pipeline 317 is configured to transmit, to the second liquid outlet interface 3142, the liquid-phase cooling medium transmitted by the liquid cooling device 420 from the first liquid inlet interface 3121, and then the liquid-phase cooling medium is transmitted to the thermal management system 330 by the vehicle-mounted charging connection apparatus 310 through the second liquid outlet interface 3142, so that the liquid-phase cooling medium cools the power battery 320 via the thermal management system 330. The heating liquid inlet pipeline 3100 may be configured to transmit, to the second liquid outlet interface 3142, a liquid-phase heating medium transmitted by the liquid cooling device 420 from the first liquid inlet interface 313, and then the liquid-phase heating medium is transmitted to the thermal management system 330, so that the liquid-phase heating medium heats the power battery 320 via the thermal management system 330. The liquid outlet pipeline 318 may be configured to transmit, to the liquid cooling device 420 through the first liquid outlet interface 3122, the liquid-phase cooling medium or the liquid-phase heating medium that is in the thermal management system 330 and that is received through the second liquid inlet interface 3141, to form a cooling cycle of the liquid-phase cooling medium in the thermal management system 330, or form a heating cycle of the liquid-phase heating medium in the thermal management system 330.

During specific implementation, in some embodiments, as shown in FIG. 6, the vehicle-mounted charging connection apparatus 310 may further include a stop valve 3300 and a stop valve 3400. The stop valve 3300 may be connected to the liquid inlet pipeline 317, and is configured to control connection or disconnection of the liquid inlet pipeline 317. The stop valve 3400 may be connected to the heating liquid inlet pipeline 3100, and is configured to control connection or disconnection of the heating liquid inlet pipeline 3100. When the liquid cooling device 420 transmits the liquid-phase cooling medium from the first liquid inlet interface 3121, the stop valve 3300 may be turned on, and the stop valve 3400 may be turned off, so that the liquid-phase cooling medium is transmitted to the second liquid outlet interface 3142 through the liquid inlet pipeline 317. When the liquid cooling device 420 transmits the liquid-phase heating medium from the first liquid inlet interface 3121, the stop valve 3400 may be turned on, and the stop valve 3300 may be turned off, so that the liquid-phase cooling medium is transmitted to the second liquid outlet interface 3142 through the heating liquid inlet pipeline 3100.

In some embodiments, still as shown in FIG. 6, different from the embodiments shown in FIG. 4 and FIG. 5, the vehicle-end direct current interface 3111 and the vehicle-end charging output interface 313 may be electrically connected to each other through multiple pairs of positive and negative direct current power cables, to improve power transmitted to the power battery 320 by the vehicle-mounted charging connection apparatus 310.

In some embodiments, as shown in FIG. 6, to further cool the power transmission loop between the vehicle-end direct current interface 3111 and the vehicle-end charging output interface 313, the vehicle-mounted charging connection apparatus 310 may further include a heat exchange structure 3200, and the heat exchange structure 3200 may be connected to the liquid inlet pipeline 317, so that when the liquid inlet pipeline 317 transmits the liquid-phase cooling medium, the liquid-phase cooling medium may exchange, via the heat exchange structure 3200, heat with the vehicle-end direct current interface 3111 and the power transmission cable electrically connected to the vehicle-end direct current interface 3111, to cool the vehicle-end direct current interface 3111 and the power transmission cable electrically connected to the vehicle-end direct current interface 3111.

For example, the heat exchange structure 3200 may be a circulation pipe having a heat conduction property. The circulation pipe may be thermally connected to the vehicle-end direct current interface 3111 and the power transmission cable electrically connected to the vehicle-end direct current interface 3111, and heat generated by the vehicle-end direct current interface 3111 and the power transmission cable electrically connected to the vehicle-end direct current interface 3111 may be conducted to the heat exchange structure 3200. The heat exchange structure 3200 may be connected to the liquid inlet pipeline 317, so that when the liquid-phase cooling medium transmitted by the liquid inlet pipeline 317 flows through the circulation pipe, heat on the heat exchange structure 3200 may be absorbed. The liquid-phase cooling medium that absorbs the heat may be transmitted to the thermal management system 330 through the second liquid outlet interface 3142, to continue to cool the power battery 320.

It may be understood that the foregoing specific structure of the heat exchange structure 3200 is merely an example. In embodiments of this application, provided that the heat exchange structure 3200 can be connected to the liquid inlet pipeline 317, and can enable the liquid-phase cooling medium transmitted by the liquid inlet pipeline 317 to exchange heat with the vehicle-end direct current interface 3111 and the power transmission cable electrically connected to the vehicle-end direct current interface 3111.

Still refer to FIG. 4 and FIG. 5. In some embodiments, the vehicle-mounted charging connection apparatus 310 may further include a first liquid inlet/outlet temperature sensor 319. The first liquid inlet/outlet temperature sensor 319 may be configured to detect a temperature of the first liquid inlet/outlet 312.

Specifically, the first liquid inlet/outlet temperature sensor 319 may be disposed close to the first liquid inlet/outlet 312 and configured to detect a temperature of a liquid-phase medium flowing through the first liquid inlet/outlet 312, for example, detect a temperature of the liquid-phase cooling medium or the liquid-phase heating medium.

During specific implementation, the vehicle-mounted charging connection controller 315 may be electrically connected to the first liquid inlet/outlet temperature sensor 319. The vehicle-mounted charging connection controller 315 may be configured to obtain the temperature detected by the first liquid inlet/outlet temperature sensor 319, to monitor and generate an alarm in real time for the temperature of the liquid-phase medium flowing through the first liquid inlet/outlet 312.

The foregoing describes the vehicle-mounted charging connection apparatus 310 provided in this embodiment of this application. When the vehicle-mounted charging connection apparatus 310 is used in the electric vehicle 300, the vehicle-mounted charging connection apparatus 310 may transmit the liquid-phase cooling medium (or the liquid-phase heating medium) transmitted by the off-vehicle liquid cooling device to the thermal management system 330 of the electric vehicle 300, so that the thermal management system 330 can cool the power battery 320 in the electric vehicle 300 by using the transmitted liquid-phase cooling medium. With reference to the accompanying drawings, the following further describes a specific pipeline structure in which the thermal management system 330 cools the power battery 320 by using the liquid-phase cooling medium in the off-vehicle liquid cooling device.

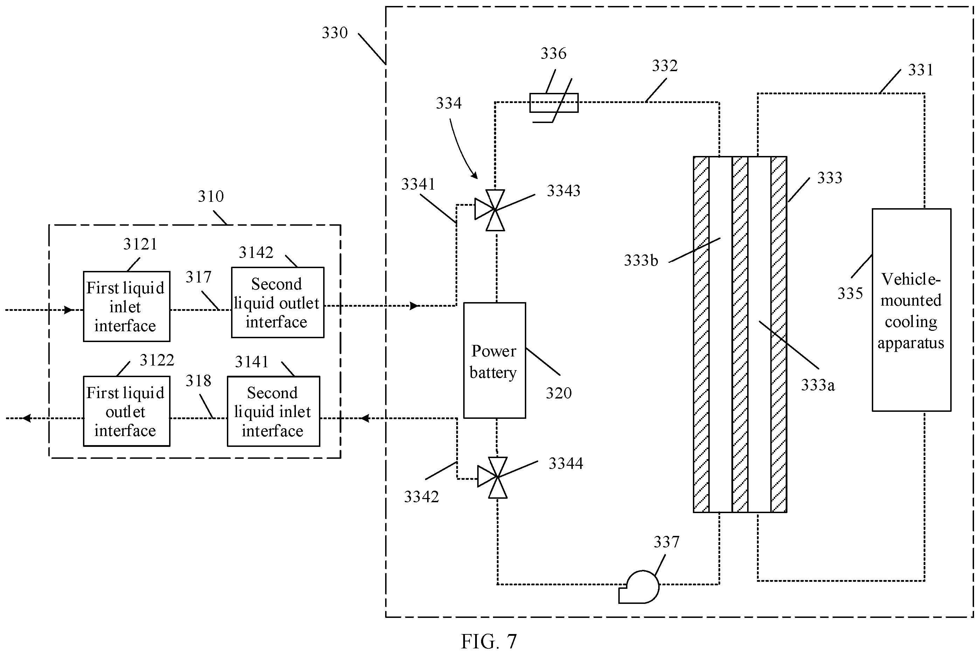

FIG. 7 is a diagram of a structure of connection between the vehicle-mounted charging connection apparatus 310, the power battery 320, and the thermal management system 330 according to an embodiment of this application.

Refer to FIG. 7. The thermal management system 330 may include a first vehicle-end cooling loop 331, a second vehicle-end cooling loop 332, a first heat exchanger 333, and a cooling component 334.

The first heat exchanger 333 may include a first heat exchange channel 333a and a second heat exchange channel 333b. The first heat exchange channel 333a is connected to the first cooling loop 331, and the second heat exchange channel 333b and the power battery 320 are connected to the second cooling loop 332. The second cooling loop 332 is configured to cool the power battery 320, and the first cooling loop 331 may exchange heat with the second cooling loop 332 via the first heat exchanger 333.

Specifically, a first liquid working medium circulates in the first cooling loop 331, and a second liquid working medium circulates in the second cooling loop 332. In other words, the first liquid working medium circulates in the first heat exchange channel 333a of the first heat exchanger 333, and the second liquid working medium circulates in the second heat exchange channel 333b of the first heat exchanger 333. When the thermal management system 330 works, the second liquid working medium in the second cooling loop 332 flows into the power battery 320, and absorbs heat generated by the power battery 320. Then, the second liquid working medium with the heat flows out of the power battery 320, to take the heat generated by the power battery 320 into the second cooling loop 332. When the second liquid working medium with the heat is transmitted to the second heat exchange channel 333b in the second cooling loop 332, the second liquid working medium may exchange, through the first heat exchange channel 333a, heat with the first liquid working medium circulating in the first heat exchange channel 333a, to transfer the heat to the first liquid working medium, thereby cooling the second liquid working medium.

The cooled second liquid working medium may circulate in the second cooling loop 332 and flow into the power battery 320 again. The first liquid working medium that absorbs the heat may be cooled in the first cooling loop 331. For example, in some embodiments, the thermal management system 330 may further include a vehicle-mounted cooling apparatus 335. The vehicle-mounted cooling apparatus 335 is connected to the first cooling loop 331, and the vehicle-mounted cooling apparatus 335 may cool the first liquid working medium circulating in the first cooling loop 331, to implement a cooling cycle of the thermal management system 330 for the power battery 320.

In an example, the vehicle-mounted cooling apparatus 335 may include a compressor, a condenser, a heat exchanger, and the like. It may be understood that the foregoing composition structure of the vehicle-mounted cooling apparatus 335 is merely an example. In embodiments of this application, provided that the composition structure of the vehicle-mounted cooling apparatus 335 can implement cooling of the first liquid working medium circulating in the first cooling loop 331.

In some embodiments, the thermal management system 330 may further include a thermistor 336. The thermistor 336 may be connected to the second cooling loop 332, and is configured to monitor a temperature of the second liquid working medium circulating in the second cooling loop 332.

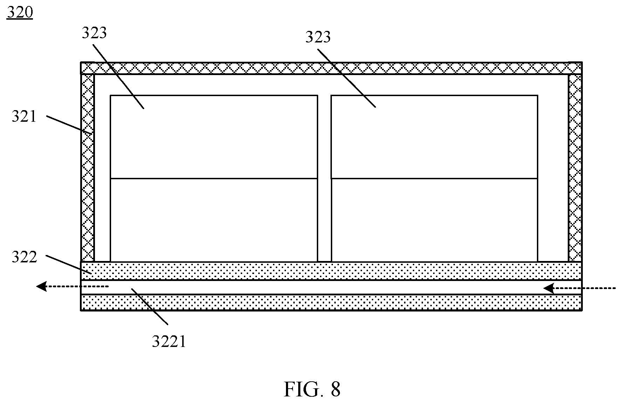

It may be further understood that, during specific implementation, a runner may be disposed in the power battery 320, to circulate the second liquid working medium. For example, FIG. 8 shows an example of a diagram of a structure of the power battery 320 provided with a runner.

Refer to FIG. 8. The power battery 320 may include a housing 321, a liquid cooling plate 322, and a plurality of battery modules 323. The housing 321 and the liquid cooling plate 322 may form an accommodation space through enclosing. The plurality of battery modules 323 are disposed in the accommodation space after being connected in series and/or in parallel, and are thermally connected to the liquid cooling plate 322. A circulation pipe 3221 is disposed in the liquid cooling plate 322. The circulation pipe 3221 may be connected to the second cooling loop 332, so that the second liquid working medium in the second cooling loop 332 may circulate in the circulation pipe 3221. In this way, heat generated by the plurality of battery modules 323 may be transferred to the liquid cooling plate 322 in a heat conduction manner, and then is absorbed by the second liquid working medium circulating in the circulation pipe 3221. The second liquid working medium that absorbs the heat flows out of the circulation pipe 3221, to take the heat generated by the plurality of battery modules 323 away from the power battery 320.

It may be understood that the foregoing structure of the power battery 320 provided with the liquid cooling plate 322 is merely an example. In embodiments of this application, provided that the structure of the power battery 320 enables the second liquid working medium in the second cooling loop 332 to cool the power battery 320 connected to the second cooling loop 342.

Still refer to FIG. 7. The cooling component 334 may include a cooling liquid inlet pipeline 3341 and a cooling liquid outlet pipeline 3342. The cooling liquid inlet pipeline 3341 and the cooling liquid outlet pipeline 3342 are separately configured to connect to the off-vehicle liquid cooling device, for example, connected to the liquid cooling device 420 shown in FIG. 4, to form a third cooling loop with the off-vehicle liquid cooling device. The third cooling loop is configured to cool the power battery 320.

In an example, still as shown in FIG. 4, one end of the cooling liquid inlet pipeline 3341 is connected to the second liquid outlet interface 3142, and the other end of the cooling liquid inlet pipeline 351 is connected to an input end of the power battery 320. One end of the cooling liquid outlet pipeline 3342 is connected to the second liquid inlet interface 3141, and the other end of the cooling liquid outlet pipeline 3342 is connected to an output end of the power battery 320.

Specifically, the other end of the cooling liquid inlet pipeline 3341 may be connected to an input end that is of the power battery 320 and that is connected to the second cooling loop 332, and the other end of the cooling liquid outlet pipeline 3342 may be connected to an output end that is of the power battery 320 and that is connected to the second cooling loop 332, so that the other end of the cooling liquid inlet pipeline 3341 and the other end of the cooling liquid outlet pipeline 3342 are connected to the second cooling loop 332.

During specific implementation, the liquid-phase cooling medium transmitted by the liquid cooling device 420 may be first transmitted to the vehicle-mounted charging connection apparatus 310 through the first liquid inlet interface 3121, and then flow, from the vehicle-mounted charging connection apparatus 310 through the second liquid outlet interface 3142 and the cooling liquid inlet pipeline 3341, into the second cooling loop 332 in which the power battery 320 is located. The liquid-phase cooling medium circulates in the second cooling loop 332 and flows into the power battery 320, for example, flows into the circulation pipe 3221 in the liquid cooling plate 322 shown in FIG. 7. The liquid-phase cooling medium may circulate in the circulation pipe 3221 of the liquid cooling plate 322, and absorb the heat generated by the plurality of battery modules 323. The liquid-phase cooling medium that absorbs the heat flows out of the power battery 32, flows into the vehicle-mounted charging connection apparatus 310 from the second liquid outlet interface 3142 through the cooling liquid outlet pipeline 352, and then is transmitted to the off-vehicle liquid cooling device 420 from the first liquid outlet interface 3122 of the vehicle-mounted charging connection apparatus 310, to take the heat generated by the power battery 320 away from the electric vehicle 300, so as to cool the power battery 320.

In some embodiments, to drive the liquid-phase cooling medium that absorbs the heat to flow into the cooling liquid outlet pipeline 3342 from the power battery 320, the thermal management system further includes a water pump 337. The water pump 337 may be connected between an output end of the second heat exchange channel 333b and the cooling liquid outlet pipeline 3342.

It may be understood that, in the foregoing embodiment, because the liquid-phase cooling medium transmitted by the liquid cooling device 420 circulates in the second cooling loop 342, to prevent the liquid-phase cooling medium transmitted by the liquid cooling device 420 from affecting purity of the second liquid working medium in the second cooling loop 332, the liquid-phase cooling medium and the second liquid working medium may be of a same type of liquid, for example, both may be cooling water.

In some embodiments, an off-vehicle cooling system that is for the power battery 320 and that includes the cooling liquid inlet pipeline 3341, the cooling liquid outlet pipeline 3342, and the off-vehicle liquid cooling device 420 may be connected in parallel or in series to an on-vehicle cooling system that is for the power battery 320 and that includes the first cooling loop 331 and the second cooling loop 332.

For example, in a possible example, still as shown in FIG. 7, the cooling component 334 may further include a first three-way valve 3343 and a second three-way valve 3344 that are connected to each other.

One end of the power battery 320 is connected to one end of the second heat exchange channel 333b via the first three-way valve 3343, and the other end of the power battery 320 is connected to the other end of the second heat exchange channel 333b via the second three-way valve 3344. One end of the cooling liquid inlet pipeline 3341 is configured to connect to the off-vehicle liquid cooling device, for example, the liquid cooling device 420, the other end of the cooling liquid inlet pipeline 3341 is connected to one end of the power battery 320 via the first three-way valve 3343, one end of the cooling liquid outlet pipeline 3342 is configured to connect to the off-vehicle liquid cooling device, for example, the liquid cooling device 420, and the other end of the cooling liquid outlet pipeline 3343 is connected to the other end of the power battery 420 via the second three-way valve 3344, to form a third cooling loop. Therefore, the off-vehicle cooling system that is for the power battery 320 and that includes the cooling liquid inlet pipeline 3341, the cooling liquid outlet pipeline 3342, and the liquid cooling device 420 is connected in parallel to the on-vehicle cooling system for the power battery 320.

Specifically, a first valve port of the first three-way valve 3343 and a first valve port of the second three-way valve 3344 may be connected to each other through the second channel 333b of the first heat exchanger 333, a second valve port of the first three-way valve 3343 and a second valve port of the second three-way valve 3344 may be connected to each other via the power battery 320, a third valve port of the first three-way valve 3343 is connected to the other end of the heat exchange liquid inlet pipeline 3341, and a third valve port of the second three-way valve 3344 is connected to the other end of the heat exchange liquid outlet pipeline 3342.

During specific implementation, when the electric vehicle 300 is not connected to the off-vehicle liquid cooling device 420 via the vehicle-mounted charging connection apparatus 310, the first valve port and the second valve port of the first three-way valve 3343 and the first valve port and the second valve port of the second three-way valve 3344 may be controlled to be turned on, and the third valve port of the first three-way valve 3343 and the third valve port of the second three-way valve 3344 may be controlled to be turned off. In this case, the thermal management system 330 may cool the power battery 320 via the on-vehicle cooling system that is for the power battery 320 and that includes the first cooling loop 331 and the second cooling loop 332.

When the electric vehicle 300 is connected to the off-vehicle liquid cooling device 420 via the vehicle-mounted charging connection apparatus 310, the second valve port and the third valve port of the first three-way valve 3343 and the second valve port and the third valve port of the second three-way valve 3344 may be controlled to be turned on, and the first valve port of the first three-way valve 3343 and the first valve port of the second three-way valve 3344 may be controlled to be turned off. In this case, the thermal management system 330 may cool the power battery 320 via the off-vehicle cooling system that is for the power battery 320 and that includes the cooling liquid inlet pipeline 3341, the cooling liquid outlet pipeline 3342, and the off-vehicle liquid cooling device 420.

In this embodiment of this application, the off-vehicle cooling system that is for the power battery 320 and that includes the cooling component 334 and the off-vehicle liquid cooling device 420 may be connected in parallel to the on-vehicle cooling system that is for the power battery 320 and that is in the thermal management system 330. This helps reduce control complexity of the two cooling systems.

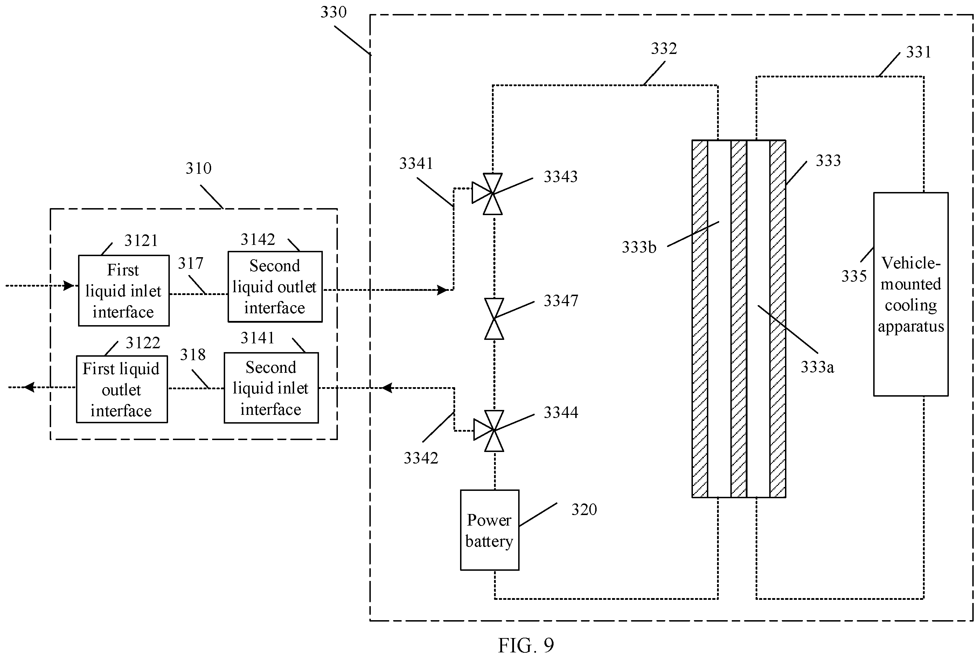

FIG. 9 is a diagram of another structure of connection between the vehicle-mounted charging connection apparatus 310, the power battery 320, and the thermal management system 330 according to an embodiment of this application.

Different from the embodiment shown in FIG. 7, in the embodiment shown in FIG. 9, an off-vehicle cooling system that is for the power battery 320 and that includes the cooling liquid inlet pipeline 3341, the cooling liquid outlet pipeline 3342, and the off-vehicle liquid cooling device is connected in series to an on-vehicle cooling system that is for the power battery 320 and that includes the first cooling loop 331 and the second cooling loop 332.

The first three-way valve 3343, the second three-way valve 3344, the power battery 320, and the second heat exchange channel 333b are sequentially connected to the second cooling loop 332. One end of the cooling liquid inlet pipeline 3341 is configured to connect to the off-vehicle liquid cooling device, for example, the liquid cooling device 420 shown in FIG. 4, the other end of the cooling liquid inlet pipeline 3341 is sequentially connected to the second heat exchange channel 333b and one end of the power battery 320 via the first three-way valve 3343, one end of the cooling liquid outlet pipeline 3342 is configured to connect to the off-vehicle liquid cooling device, for example, the liquid cooling device 420 shown in FIG. 4, and the other end of the cooling liquid outlet pipeline 3342 is connected to the other end of the power battery 320 via the second three-way valve 3344, to form a third cooling loop.

Specifically, the first valve port of the first three-way valve 3343 and the first valve port of the second three-way valve 3344 are connected to each other sequentially through the second heat exchange channel 333b of the first heat exchanger 333 and the power battery 320, the second valve port of the first three-way valve 3343 is connected to the second valve port of the second three-way valve 3344, the third valve port of the first three-way valve 3343 is connected to the other end of the cooling liquid inlet pipeline 3341, and the third valve port of the second three-way valve 3344 is connected to the other end of the cooling liquid outlet pipeline 3342.

During specific implementation, when the electric vehicle 300 is not connected to the off-vehicle liquid cooling device 420 via the vehicle-mounted charging connection apparatus 310, the first valve port and the second valve port of the first three-way valve 3343 and the first valve port and the second valve port of the second three-way valve 3344 may be controlled to be turned on, and the third valve port of the first three-way valve 3343 and the third valve port of the second three-way valve 3344 may be controlled to be turned off. In this case, the thermal management system 330 may cool the power battery 320 via the on-vehicle cooling system that is for the power battery 320 and that includes the first cooling loop 331 and the second cooling loop 332.

When the electric vehicle 300 is connected to the off-vehicle liquid cooling device 420 via the vehicle-mounted charging connection apparatus 310, the first valve port and the third valve port of the first three-way valve 3343 and the first valve port and the third valve port of the second three-way valve 3344 may be controlled to be turned on, and the second valve port of the first three-way valve 3343 and the second valve port of the second three-way valve 3344 may be controlled to be turned off. In this case, the thermal management system 330 may simultaneously cool the power battery 320 via both the off-vehicle cooling system that is for the power battery 320 and that includes the cooling liquid inlet pipeline 3341, the cooling liquid outlet pipeline 3342, and the off-vehicle liquid cooling device 420, and the on-vehicle cooling system that is for the power battery 320 and that includes the first cooling loop 331 and the second cooling loop 332.

In this embodiment of this application, the off-vehicle cooling system that is for the power battery 320 and that includes the cooling component 334 and the off-vehicle liquid cooling device 420 may be connected in series to the on-vehicle cooling system of the power battery 320 in the thermal management system 330, so that when the power battery 320 is cooled via the liquid cooling device 420, the thermal management system 320 can cool the power battery via both the off-vehicle cooling system and the on-vehicle cooling system for the power battery 320, to further improve efficiency of cooling the power battery 320, so as to help meet a heat dissipation requirement of the power battery 320 during high-power charging and facilitate high-power charging of the electric vehicle 300.

Still refer to FIG. 9. In some embodiments, to ensure reliability of series connection between the off-vehicle cooling system and the on-vehicle cooling system for the power battery 320, the cooling component 334 further includes a vehicle-end stop valve 3347. The vehicle-end two-way stop valve 3347 may be connected to the second cooling loop 332, is located between the second valve port of the first three-way valve 3343 and the second valve port of the second three-way valve 3344, and is configured to connect or disconnect the second cooling loop 332 between the second valve port of the first three-way valve 3343 and the second valve port of the second three-way valve 3344.

During specific implementation, when the electric vehicle 300 is not connected to the off-vehicle liquid cooling device 420 via the vehicle-mounted charging connection apparatus 310, the vehicle-end two-way stop valve 3377 may be turned on, so that the thermal management system 330 can cool the power battery 320 via the on-vehicle cooling system that is for the power battery 320 and that includes the first cooling loop 331 and the second cooling loop 332. When the electric vehicle 300 is connected to the off-vehicle liquid cooling device 420 via the vehicle-mounted charging connection apparatus 310, the vehicle-end two-way stop valve 3347 may be turned off, so that the thermal management system 330 can cool the power battery 320 via the off-vehicle cooling system that is for the power battery 320 and that includes the cooling liquid inlet pipeline 3341, the cooling liquid outlet pipeline 3342, and the off-vehicle liquid cooling device 420 that are connected in series.

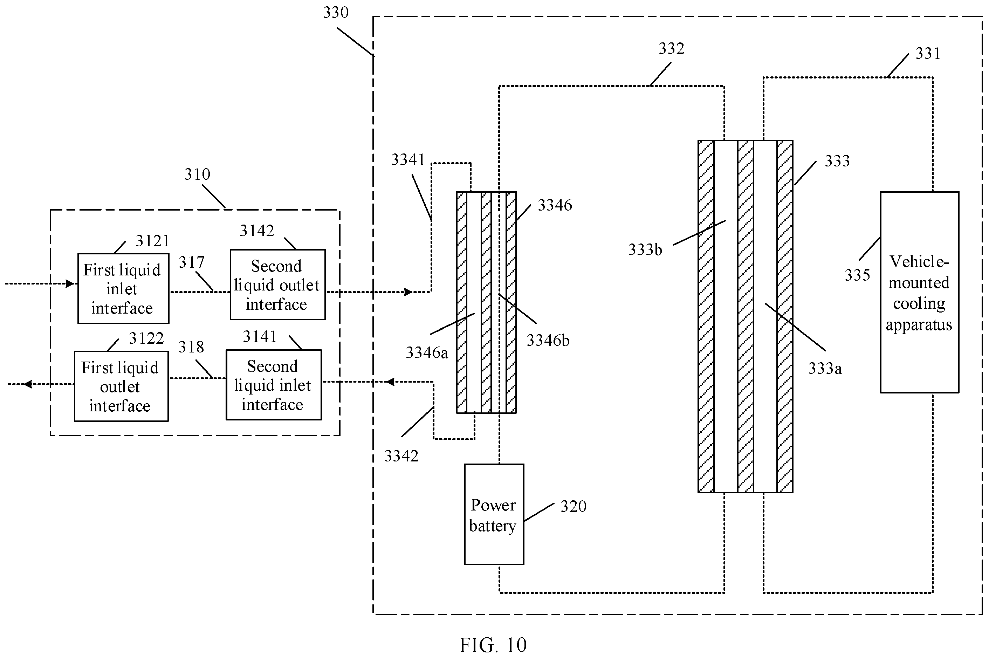

FIG. 10 is a diagram of still another structure of connection between the vehicle-mounted charging connection apparatus 310, the power battery 320, and the thermal management system 330 according to an embodiment of this application.

Different from the embodiments shown in FIG. 7 to FIG. 9, in the embodiment shown in FIG. 10, the cooling component 334 may include the cooling liquid inlet pipeline 3341, the cooling liquid outlet pipeline 3342, and a second heat exchanger 3346. The second heat exchanger 3346 may include two vehicle-end channels 3346a and 3346b, and the heat exchange channel 3346b is connected to the second cooling loop 332. One end of the cooling liquid inlet pipeline 3341 and one end of the cooling liquid outlet pipeline 3343 are separately configured to connect to the off-vehicle liquid cooling device, for example, the liquid cooling device 420 shown in FIG. 4, and the other end of the cooling liquid inlet pipeline 3341 and the other end of the cooling liquid outlet pipeline 3342 are respectively connected to two ends of the heat exchange channel 3346a, to form a third cooling loop. The third cooling loop may exchange, via the second heat exchanger 3346, heat with the second liquid working medium circulating in the second cooling loop 332, to cool the power battery 320.

During specific implementation, the liquid-phase cooling medium transmitted by the liquid cooling device 420 may flow into the heat exchange channel 3346a of the second heat exchanger 3346 via the vehicle-mounted charging connection apparatus 310 and the cooling liquid inlet pipeline 3341. The second liquid working medium in the second cooling loop 332 flows into the power battery 320, absorbs heat generated by the power battery 320, and then flows out of the power battery 320, to take the heat of the power battery 320 into the second cooling loop 332. When the second liquid working medium with the heat is transmitted to the heat exchange channel 3346b of the second heat exchanger 3346 in the second cooling loop 332, the second liquid working medium may exchange, through the heat exchange channel 3346b, heat with the liquid-phase cooling medium circulating in the heat exchange channel 3346b, to transfer the heat to the liquid-phase cooling medium, thereby cooling the second liquid working medium.

The cooled second liquid working medium may circulate in the second cooling loop 332 and flow into the power battery 320 again. The liquid-phase cooling medium that absorbs the heat may flow into the vehicle-mounted charging connection apparatus 310 through the cooling liquid outlet pipeline 3342, and then be transmitted to the off-vehicle liquid cooling device 420 from the first liquid outlet interface 3122 of the vehicle-mounted charging connection apparatus 310, to take the heat generated by the power battery 320 away from the electric vehicle 300, so as to cool the power battery 320.

In this embodiment of this application, the power battery 320 is cooled by performing heat exchange between the liquid-phase cooling medium transmitted by the liquid cooling device 420 to the thermal management system 330 and the second liquid working medium in the second cooling loop 332. This can avoid a problem that purity of the second liquid working medium in the second cooling loop 332 is affected because the liquid-phase cooling medium transmitted by the liquid cooling device 420 flows into the second cooling loop 332, and helps ensure cooling effect of the thermal management system 330 on the power battery 320.

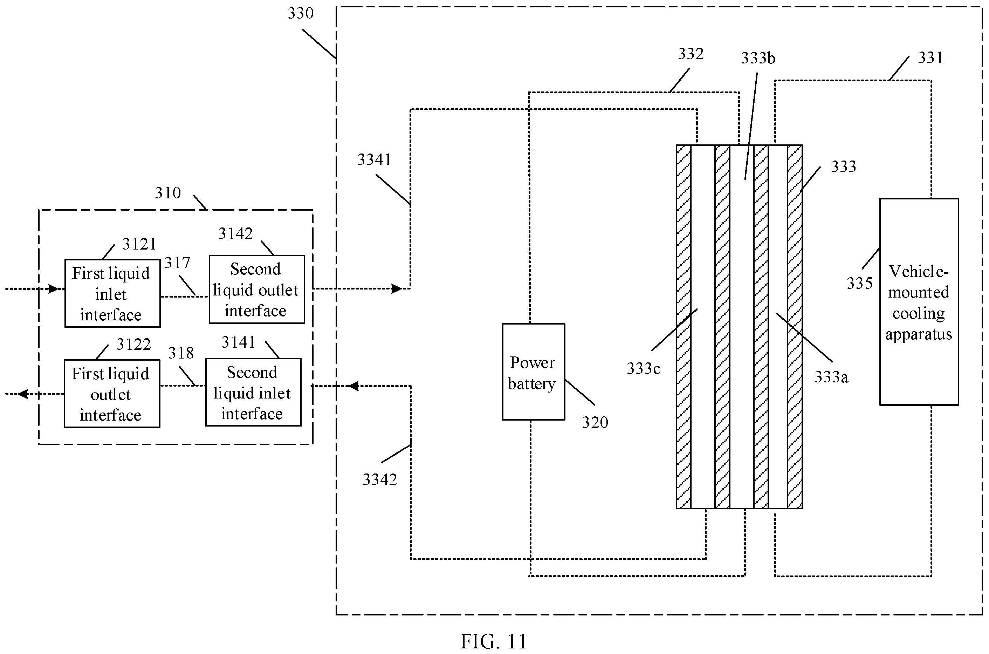

FIG. 11 is a diagram of still another structure of connection between the vehicle-mounted charging connection apparatus 310, the power battery 320, and the thermal management system 330 according to an embodiment of this application.

Different from the embodiments shown in FIG. 7 to FIG. 10, in the embodiment shown in FIG. 11, the cooling component 334 may include the cooling liquid inlet pipeline 3341 and the cooling liquid outlet pipeline 3342, and the first heat exchanger 333 may further include a third heat exchange channel 333c. One end of the cooling liquid inlet pipeline 3341 and one end of the cooling liquid outlet pipeline 3343 are separately configured to connect to the off-vehicle liquid cooling device, for example, the liquid cooling device 420 shown in FIG. 4, and the other end of the cooling liquid inlet pipeline 3341 and the other end of the cooling liquid outlet pipeline 3342 are respectively connected to two ends of the third heat exchange channel 333c, to form a third cooling loop. The third cooling loop may exchange, via the first heat exchanger 333, heat with the second liquid working medium circulating in the second cooling loop 332, to cool the power battery 320.

During specific implementation, the liquid-phase cooling medium transmitted by the liquid cooling device 420 may flow into a heat exchange intermediate pipeline 3345 via the vehicle-mounted charging connection apparatus 310 and the cooling liquid inlet pipeline 3341, and then flow into the third vehicle-end channel 333c of the first heat exchanger 332 connected to the heat exchange intermediate pipeline 3345. The second liquid working medium in the second cooling loop 332 flows into the power battery 320, absorbs heat generated by the power battery 320, and then flows out of the power battery 320, to take the heat of the power battery 320 into the second cooling loop 332. When the second liquid working medium with the heat is transmitted to the second heat exchange channel 333b of the first heat exchanger 333 in the second cooling loop 332, the second liquid working medium may exchange, through the third heat exchange channel 333c, heat with the liquid-phase cooling medium circulating in the third heat exchange channel 333c, to transfer the heat to the liquid-phase cooling medium, thereby cooling the second liquid working medium.

The cooled second liquid working medium may circulate in the second cooling loop 332 and flow into the power battery 320 again. The liquid-phase cooling medium that absorbs the heat may flow into the vehicle-mounted charging connection apparatus 310 through the cooling liquid outlet pipeline 3342, and then be transmitted to the off-vehicle liquid cooling device 420 from the first liquid outlet interface 3122 of the vehicle-mounted charging connection apparatus 310, to take the heat generated by the power battery 320 away from the electric vehicle 300, so as to cool the power battery 320.

In this embodiment of this application, the power battery 320 is cooled by performing heat exchange between the liquid-phase cooling medium transmitted by the liquid cooling device 420 to the thermal management system 330 and the second liquid working medium in the second cooling loop 332. This can avoid a problem that purity of the second liquid working medium in the second cooling loop 332 is affected because the liquid-phase cooling medium transmitted by the liquid cooling device 420 flows into the second cooling loop 332, and helps ensure cooling effect of the thermal management system 330 on the power battery 320.

The foregoing describes the vehicle-mounted charging connection apparatus 310 in the charging system 200 provided in embodiments of this application. The following specifically describes a structure of the charging pile 400 side in the charging system 200.

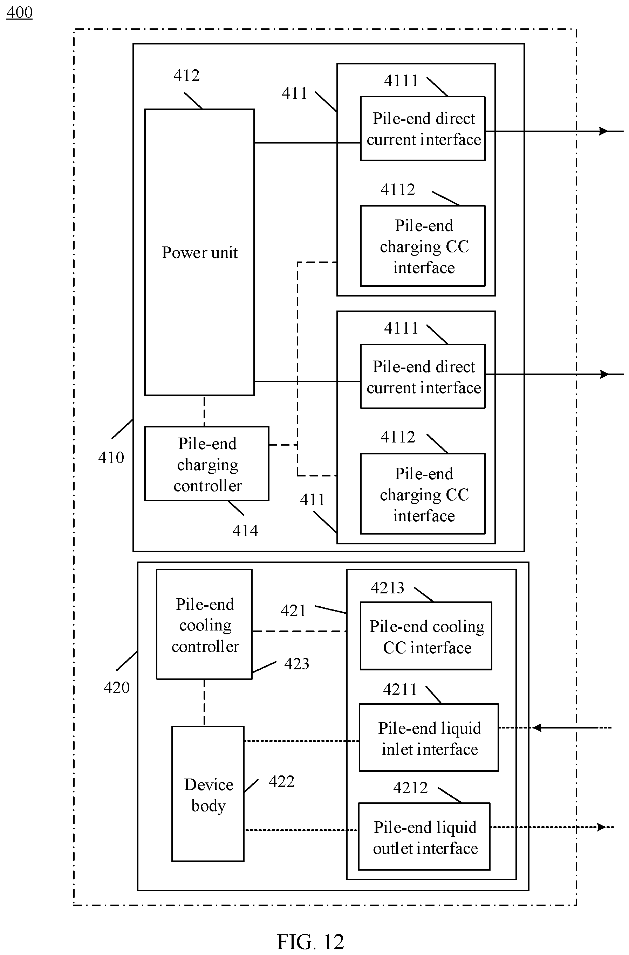

Refer to FIG. 12. The charging pile 400 may include the charging device 410 and the liquid cooling device 420.

The charging device 410 may include the pile-end charging interface 411. The pile-end charging interface 411 may be configured to electrically connect to the electric vehicle 300, for example, electrically connect to the vehicle-end charging input interface 311 of the vehicle-mounted charging connection apparatus 310 in the electric vehicle 300 shown in FIG. 4, so that the charging device 410 can output a direct current to the power battery 320 via the vehicle-mounted control apparatus 410, to charge the power battery 320. During specific implementation, the charging device 410 may include the charging power unit 412 and the at least one charging dispenser 413 electrically connected to the charging power unit 412, and the pile-end charging interface 411 may be a charging plug of a charging connector electrically connected to each charging dispenser 413.

The liquid cooling device 420 may include the pile-end liquid inlet/outlet 421. The pile-end liquid inlet/outlet 421 may be configured to connect to the electric vehicle 300, for example, connect to the first liquid inlet/outlet 312 of the vehicle-mounted charging connection apparatus 310 in the electric vehicle 300 shown in FIG. 4. In this way, the liquid cooling device 420 can transmit a liquid-phase cooling medium to the thermal management system 330 via the vehicle-mounted charging connection apparatus 310, so that the thermal management system 330 cools the power battery 320 by using the liquid-phase cooling medium transmitted by the liquid cooling device 420. During specific implementation, the liquid cooling device 420 may include a device body 422 and at least one liquid cooling connector connected to the device body 422, and the pile-end liquid inlet/outlet 421 may be a liquid cooling plug of each liquid cooling connector connected to the device body 422.

In this embodiment of this application, the charging device 410 and the liquid cooling device 420 are disposed in the charging pile 400, so that when the charging device 410 charges the electric vehicle 300 at a high power, the liquid cooling device 420 may further transmit the liquid-phase cooling medium to the electric vehicle 300. In this way, the electric vehicle 300 can cool the power battery 320 by using the transmitted liquid-phase cooling medium, to meet a heat dissipation requirement of the power battery 320 during high-power charging, and facilitate high-power charging of the electric vehicle 300 by the charging device 410.

In some embodiments, there may be one or more pile-end charging interfaces 411 and one or more pile-end liquid inlets/outlets 421. In an example, there are a plurality of pile-end charging interfaces 411 and one pile-end liquid inlet/outlet 421. The plurality of pile-end charging interfaces 411 may be charging plugs in a plurality of charging connectors, and the pile-end liquid inlet/outlet 421 may be a liquid cooling plug in one liquid cooling connector. In another example, there may be a plurality of pile-end charging interfaces 411 and a plurality of pile-end liquid inlets/outlets 421 that are in a one-to-one correspondence, and each pile-end charging interface 411 and a corresponding pile-end liquid inlet/outlet 421 may be integrated into a composite connector integrating charging and cooling. For ease of description and understanding, in this embodiment of this application, an example in which there are a plurality of pile-end charging interfaces 411 and one pile-end liquid inlet/outlet 421 is used for description.

Still refer to FIG. 12. In some embodiments, the pile-end charging interface 411 may include a pile-end direct current interface 4111 and a pile-end charging CC interface 4112, to ensure that the charging device 410 normally charges the electric vehicle 300. The pile-end direct current interface 4111 may be configured to output a direct current to the electric vehicle 300. For example, the pile-end direct current interface 4111 may be configured to electrically connect to the vehicle-end direct current interface 3111 shown in FIG. 4, to output the direct current to the vehicle-end direct current interface 3111, so as to charge the power battery 320 via the vehicle-mounted charging connection apparatus 310. The pile-end charging CC interface 4112 may be specifically electrically connected to the vehicle-end charging CC interface 3112 shown in FIG. 4. A voltage signal of the pile-end CC interface 4112 may indicate a status of connection between the pile-end charging interface 411 and the electric vehicle 300, for example, may indicate a status of connection between the pile-end charging interface 411 and the vehicle-end charging input interface 311 shown in FIG. 4.

During specific implementation, as shown in FIG. 12, in some embodiments, the charging device 410 may further include a pile-end charging controller 414. The pile-end charging controller 414 may be configured to: detect the voltage signal of the pile-end charging CC interface 4112, and determine the status of connection between the pile-end charging interface 411 and the vehicle-end charging input interface 311 based on the voltage signal of the pile-end charging CC interface 4112.

It may be understood that the voltage signal of the pile-end charging CC interface 4112 may be a voltage value of the vehicle-end charging CC interface 4112, and different voltage values indicate different states of connection between the pile-end charging interface 411 and the vehicle-end charging input interface 311. For example, when the pile-end charging controller 414 detects that the voltage value of the pile-end charging CC interface 4112 is 0, it may indicate that the pile-end charging interface 411 is not connected to the vehicle-end charging input interface 311; or when the pile-end charging controller 414 detects that the voltage value of the pile-end charging CC interface 4112 is 4 V, it may indicate that the pile-end charging interface 411 is connected to the vehicle-end charging input interface 311.

It may be further understood that the pile-end charging controller 414 may be disposed in the charging power unit 412, and is electrically connected to the plurality of power conversion apparatuses in the charging power unit 412. The pile-end charging controller 414 may be configured to control the plurality of power conversion apparatuses to convert an alternating current from an external power grid into a stable direct current and then output the stable direct current.

Still refer to FIG. 12. Similarly, in some embodiments, to ensure that the liquid cooling device 420 normally transmits the liquid-phase cooling medium to the vehicle-mounted charging connection apparatus 310, the pile-end liquid inlet/outlet 421 may include a pile-end liquid inlet interface 4211, a pile-end liquid outlet interface 4212, and a pile-end CC interface 4213.

The pile-end liquid inlet interface 4211 and the pile-end liquid outlet interface 4212 may be separately configured to connect to the electric vehicle 300. The pile-end liquid outlet interface 4212 may be, for example, connected to the first liquid inlet interface 3121 in the vehicle-mounted charging connection apparatus 310 shown in FIG. 4. The pile-end liquid inlet interface 4211 may be, for example, connected to the first liquid outlet interface 3131 of the vehicle-mounted charging connection apparatus 310 in the electric vehicle 300 shown in FIG. 4.

The pile-end CC interface 4213 may be specifically electrically connected to the vehicle-end cooling CC interface 3123 shown in FIG. 4. A voltage signal of the pile-end CC interface 4213 may indicate a status of connection between the pile-end liquid inlet/outlet 421 and the electric vehicle 300, for example, may indicate a status of connection between the pile-end liquid inlet/outlet 421 and the first liquid inlet/outlet 312 of the vehicle-mounted charging connection apparatus 310 shown in FIG. 4.

During specific implementation, as shown in FIG. 12, in some embodiments, the liquid cooling device 420 may further include a pile-end cooling controller 423. The pile-end cooling controller 423 may be configured to: detect the voltage signal of the pile-end CC interface 4213, and determine the status of connection between the pile-end liquid inlet/outlet 421 and the electric vehicle 300 based on the voltage signal of the pile-end CC interface 4213.

It may be understood that the voltage signal of the pile-end CC interface 4213 may be a voltage value of the pile-end CC interface 4213, and different voltage values indicate different states of connection between the pile-end liquid inlet/outlet 421 and the first liquid inlet/outlet 312. For example, when the pile-end cooling controller 423 detects that the voltage value of the pile-end CC interface 4213 is 0, it may indicate that the pile-end liquid inlet/outlet 421 is not connected to the first liquid inlet/outlet 312; or when the pile-end cooling controller 423 detects that the voltage value of the pile-end CC interface 4213 is 4 V, it may indicate that the pile-end liquid inlet/outlet 421 is connected to the first liquid inlet/outlet 312.

It may be understood that the foregoing determining, respectively based on the pile-end charging CC interface 4112 and the pile-end cooling CC interface 4213, the status of connection between the vehicle-end charging input interface 311 and the pile-end charging output interface 411 and the status of connection between the first liquid inlet/outlet 312 and the pile-end liquid inlet/outlet 421 is described in detail below. Details are not described herein.

It may be further understood that the pile-end cooling controller 423 may be disposed in the device body 422, and may be configured to control a liquid cooling system in the device body 422 to work.

In some other embodiments, when the liquid cooling device 420 is disposed in the charging device 410, the pile-end cooling controller 423 may not be separately disposed in the liquid cooling device 420, but the charging controller 414 of the charging device 410 is directly used as a controller of the liquid cooling device 420. In other words, the charging controller 414 may also be configured to: detect the voltage signal of the pile-end CC interface 4213, and determine the status of connection between the pile-end liquid inlet/outlet 421 and the electric vehicle 300 based on the voltage signal of the pile-end CC interface 4213.

The foregoing describes the structure of the pile-end liquid inlet/outlet 421 in the liquid cooling device 420. The following further describes the liquid cooling system in the device body 422 that is in the liquid cooling device 420 and that is connected to the pile-end liquid inlet/outlet 421.

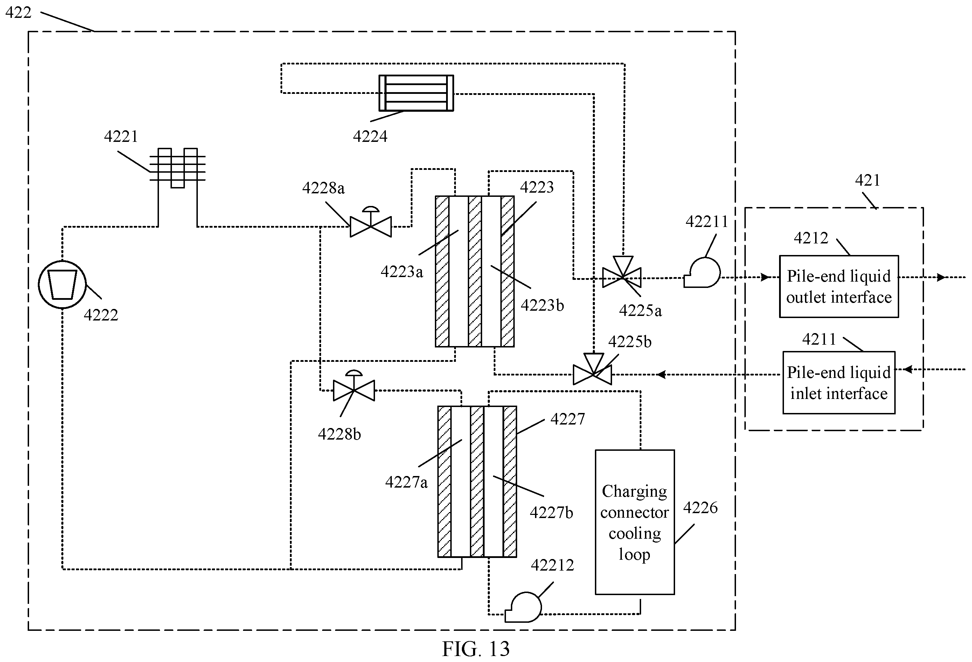

FIG. 13 is a diagram of a structure of the device body 422 according to an embodiment of this application.

Refer to FIG. 13. The device body 422 may include a condenser 4221, a compressor 4222, a first throttle valve 4228a, and a first heat exchanger 4223. The first heat exchanger 4223 includes a first heat exchange channel 4223a and a second heat exchange channel 4223b. The compressor 4222, the condenser 4221, the first throttle valve 4228a, and the first heat exchange channel 4223a are sequentially connected to form the first cooling loop. Two ends of the second heat exchange channel 4223b are respectively connected to the pile-end liquid inlet interface 4211 and the pile-end liquid outlet interface 4212, to form a second cooling loop with the electric vehicle 300 through the pile-end liquid inlet interface 4211 and the pile-end liquid outlet interface 4212. The first cooling loop exchanges heat with the second cooling loop via the first heat exchanger 4223, to cool the second cooling loop, and the second cooling loop is configured to cool the electric vehicle 300.

During specific implementation, when the liquid cooling device 420 is connected to the vehicle-mounted charging connection apparatus 310, a liquid-phase cooling medium circulating in the second heat exchange channel 4223b of the first heat exchanger 4223 may be transmitted to the vehicle-mounted charging connection apparatus 310 through the pile-end liquid outlet interface 4212, and then transmitted to the thermal management system 330 via the vehicle-mounted charging connection apparatus 310, to exchange heat with the power battery 320 via the thermal management system 330, so as to cool the power battery 320. The heat-exchanged liquid-phase cooling medium in the thermal management system 330 may be output via the vehicle-mounted charging connection apparatus 310, and further flows into the second heat exchange channel 4223b of the first heat exchanger 4223 through the pile-end liquid inlet interface 4211.

The liquid-phase cooling medium in the second heat exchange channel 4223b may exchange heat with the first cooling loop through the first heat exchange channel 4223a, to transfer carried heat to the first cooling loop, so as to cool the liquid-phase cooling medium in the second heat exchange channel 4223b. The cooled liquid-phase cooling medium in the second heat exchange channel 4223b is transmitted to the vehicle-mounted charging connection apparatus 310 again through the pile-end liquid outlet interface 4212, to implement a cooling cycle of the liquid-phase cooling medium in the second heat exchange channel 4223b for the power battery 320. In addition, the cooling medium with heat in the first cooling loop is cooled sequentially by using the compressor 4222, the condenser 4221, and the first throttle valve 4228a, to implement a cooling cycle of the cooling medium in the first cooling loop.

In this embodiment of this application, the first heat exchange channel 4223a of the first heat exchanger 4223 may form the first cooling loop with the condenser 4221, the compressor 4222, and the first throttle valve 4228a, and the second heat exchange channel 4223b of the first heat exchanger 4223 may form the second cooling loop with the electric vehicle 300 through the pile-end liquid inlet interface 4211 and the pile-end liquid outlet interface 4212. In this design, the first cooling loop can cool the liquid-phase cooling medium in the second cooling loop via the first heat exchanger 4223, to implement a cooling cycle of the liquid-phase cooling medium in the second cooling loop for the electric vehicle 300, so that the power battery 320 is cooled while the charging device 410 charges the power battery 320, to help meet a heat dissipation requirement of the power battery 320 during high-power charging, and facilitate high-power charging of the electric vehicle 300 by the charging device 410.

Still refer to FIG. 13. In some embodiments, the device body 422 further includes a heat sink 4224, a first three-way valve 4225a, and a second three-way valve 4225b.

The first three-way valve 4225a is connected between one end of the second heat exchange channel 4223b and the pile-end liquid outlet interface 4212, and the second three-way valve 4225b is connected between the other end of the second heat exchange channel 4223b and the pile-end liquid inlet interface 4211. One end of the heat sink 4224 is connected to the pile-end liquid outlet interface 4212 via the first three-way valve 4225a, and the other end of the heat sink 4224 is connected to the pile-end liquid inlet interface 4211 via the second three-way valve 4225b, to form a third cooling loop with the electric vehicle 300. A liquid-phase cooling medium in the third cooling loop is used to cool the electric vehicle 300, and the heat sink 4224 is configured to perform air cooling on the liquid-phase cooling medium in the third cooling loop.

Specifically, a first valve port of the first three-way valve 4225a (a right valve port of the first three-way valve 4225a shown in the figure) is connected to the pile-end liquid outlet interface 4212, a second valve port of the first three-way valve 4225a (an upper valve port of the first three-way valve 4225a shown in the figure) is connected to an output end of the heat sink 4224, and a third valve port of the first three-way valve 4225a (a left valve port of the first three-way valve 4225a shown in the figure) is connected to one end of the second heat exchange channel 4223b of the first heat exchanger 4223. A first valve port of the second three-way valve 4224b (a right valve port of the second three-way valve 4224b shown in the figure) is connected to the pile-end liquid inlet interface 4211, a second valve port of the second three-way valve 422b (an upper valve port of the second three-way valve 4224b shown in the figure) is connected to an input end of the heat sink 4224, and a third valve port of the second three-way valve 4223b (a left valve port of the second three-way valve 4224b shown in the figure) is connected to the other end of the second heat channel 4223b of the first heat exchanger 4223. In this case, both the heat sink 4224 and the first heat exchanger 4223 are connected to the first pile-end liquid inlet interface 4211 and the first pile-end liquid outlet interface 4212.

During specific implementation, when the liquid cooling device 420 is connected to the vehicle-mounted charging connection apparatus 310, the liquid-phase cooling medium in the third cooling loop formed by the heat sink 4224 and the electric vehicle 300 through the pile-end liquid inlet interface 4211 and the pile-end liquid outlet interface 4212 may be transmitted to the thermal management system 330 via the vehicle-mounted charging connection apparatus 310, or the liquid-phase cooling medium in the second cooling loop formed by the second heat exchange channel 4223b of the first heat exchanger 4223 and the electric vehicle 300 through the pile-end liquid inlet interface 4211 and the pile-end liquid outlet interface 4212 may be transmitted to the thermal management system 330 via the vehicle-mounted charging connection apparatus 310, to cool the power battery 320.

In a possible example, the right valve port and the upper valve port of the first three-way valve 4225a and the right valve port and the upper valve port of the second three-way valve 4225b may be turned on, and the left valve port of the first three-way valve 4225a and the left valve port of the second three-way valve 4225b may be turned off.

In this case, the liquid-phase cooling medium in the third cooling loop in which the heat sink 4224 is located may be transmitted to the vehicle-mounted charging connection apparatus 310 through the pile-end liquid outlet interface 4212, and then transmitted to the thermal management system 330 via the vehicle-mounted charging connection apparatus 310, to exchange heat with the power battery 320 via the thermal management system 330, so as to cool the power battery 320. The heat-exchanged liquid-phase cooling medium in the thermal management system 330 may be output via the vehicle-mounted charging connection apparatus 310, further flows into the third cooling loop through the pile-end liquid inlet interface 4211, and is air-cooled by the heat sink 4224. The air-cooled liquid-phase cooling medium in the third cooling loop is transmitted to the vehicle-mounted charging connection apparatus 310 again through the pile-end liquid outlet interface 4212, to implement a cooling cycle of the liquid-phase cooling medium for the power battery 320.

In another possible example, the left valve port and the right valve port of the first three-way valve 4225a and the left valve port and the right valve port of the second three-way valve 4225b may be turned on, and the upper valve port of the first three-way valve 4225a and the upper valve port of the second three-way valve 4225b may be turned off.

In this case, the liquid-phase cooling medium in the second cooling loop in which the second heat exchange channel 4223b of the first heat exchanger 4223 is located may be transmitted to the vehicle-mounted charging connection apparatus 310 through the pile-end liquid outlet interface 4212, to exchange heat with the power battery 320 via the thermal management system 330, so as to cool the power battery 320. For specific descriptions, refer to the foregoing embodiment. Details are not described herein again.

In this embodiment of this application, the heat sink 4224 forms the third cooling loop with the electric vehicle 300 through the pile-end liquid inlet interface 4211 and the pile-end liquid outlet interface 4212, the liquid-phase cooling medium in the third cooling loop may be used to cool the electric vehicle 300, and the heat sink 4224 performs natural air cooling on the liquid-phase cooling medium in the third cooling loop. This helps reduce overall energy consumption of the liquid cooling device 420.

In some embodiments, still as shown in FIG. 13, to drive the liquid-phase cooling medium in the second cooling loop and/or the third cooling loop to flow in the loop, the device body 422 may further include a water pump 42211. The water pump 42211 may be connected between the right valve port of the first three-way valve 4225a and the pile-end liquid outlet interface 4212; or the water pump 42211 may be connected between the right valve port of the second three-way valve 4225b and the pile-end liquid inlet interface 4211.

It may be understood that, in this embodiment of this application, the liquid cooling device 420 may further cool the charging device 410, for example, cool the plurality of power conversion apparatuses in the charging power unit 412, or cool the charging connector electrically connected to the charging power unit 412.

For example, still refer to FIG. 13. In some embodiments, the device body 422 may further include a charging connector cooling loop 4226, a second throttle valve 4228b, and a second heat exchanger 4227.

The charging device 410 may further include a charging connector. A liquid-phase cooling medium that can circulate in the charging connector cooling loop 4226 may exchange heat with the charging connector, to cool the charging connector. The second heat exchanger 4227 includes a third heat exchange channel 4227a and a fourth heat exchange channel 4227b. The compressor 4222, the condenser 4221, the second throttle valve 4228a, and the third heat exchange channel 4227a are sequentially connected to form a fourth cooling loop. The fourth heat exchange channel 4227b is connected to the charging connector cooling loop 4226, that is, the liquid-phase cooling medium in the charging connector cooling loop 4226 may circulate in the fourth heat exchange channel 4227b.

During specific implementation, when the liquid-phase cooling medium that is in the charging connector cooling loop 4226 and that absorbs heat of the charging connector circulates to the fourth heat exchange channel 4227b of the second heat exchanger 4227, the liquid-phase cooling medium that carries the heat may exchange heat with the fourth cooling loop through the third heat exchange channel 4227a of the second heat exchanger 4227, to transfer the heat to the fourth cooling loop, so as to cool the liquid-phase cooling medium in the charging connector cooling loop, thereby implementing a cooling cycle of the charging connector cooling loop for the charging connector.

In this embodiment of this application, the liquid cooling device 420 may be integrated with the charging connector cooling loop 4226 of the charging connector via the second heat exchanger 4227, so that the liquid cooling device 420 can cool the liquid-phase cooling medium in the charging connector cooling loop, so as to provide a cooling source for a cooling cycle for the charging connector, thereby helping improve performance of cooling the charging connector.

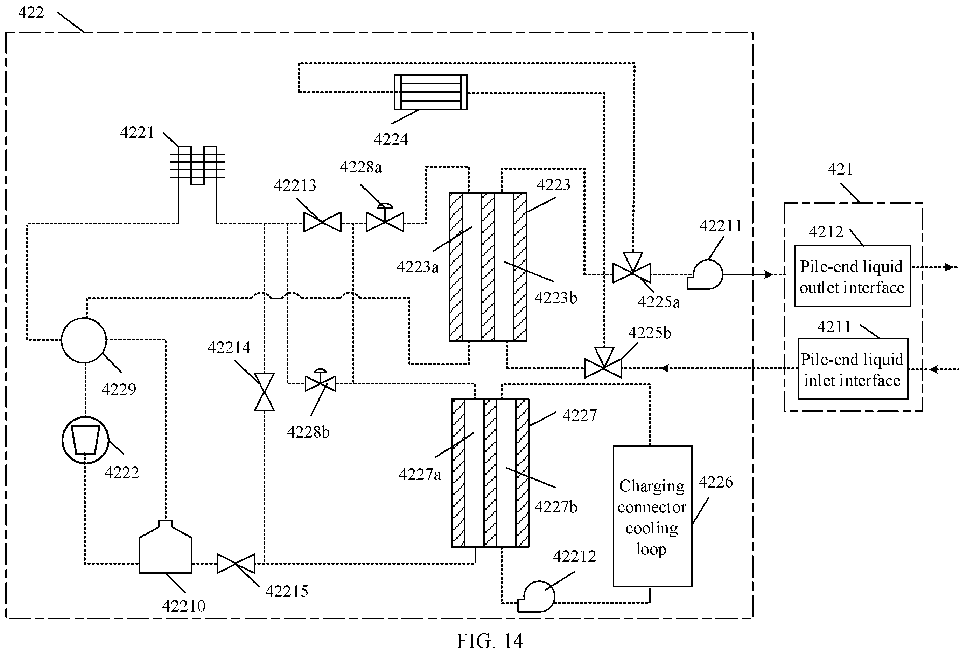

In some embodiments, still as shown in FIG. 14, the device body 422 may further include a water pump 42212 connected to the charging connector cooling loop 4226, to drive the liquid-phase cooling medium in the charging connector cooling loop 4226 to flow.

FIG. 14 is a diagram of another structure of the device body 422 according to an embodiment of this application.

It should be understood that the embodiment shown in FIG. 14 includes most technical features of the embodiment shown in FIG. 13. To avoid repetition, the following mainly describes a difference between the two embodiments.

Different from the embodiment shown in FIG. 13, in the embodiment shown in FIG. 14, the device body 422 may further include a four-way valve 4229 and a liquid storage tank 42210.

An output end of the compressor 4222 is connected to one end of the condenser 4221 via the four-way valve 4229, the other end of the condenser 4221, the first throttle valve 4228a, and one end of the first heat exchange channel 4223a are sequentially connected, and the other end of the first heat exchange channel 4223a is sequentially connected to the liquid storage tank 42210 and an input end of the compressor 4222 via the four-way valve 4229, to form the first cooling loop. In addition, the output end of the compressor 4222 is connected to the other end of the first heat exchange channel 4223a via the four-way valve 4229, the end of the first heat exchange channel 4223a, the first throttle valve 4228a, and the other end of the condenser 4221 are sequentially connected, and the end of the condenser 4221 is sequentially connected to the liquid storage tank 42210 and the input end of the compressor 4222 via the four-way valve 4229, to form a first heating loop, where the first heating loop exchanges heat with the second cooling loop via the first heat exchanger 4223, to heat the second cooling loop.

Specifically, as shown in FIG. 14, a first valve port of the four-way valve 4229 (a lower valve port of the four-way valve 4229 shown in the figure) is connected to the output end of the compressor 4222, a second valve port of the four-way valve 4229 (a right valve port of the four-way valve 4229 shown in the figure) is connected to the end of the condenser 4221, the other end of the condenser 4221 is connected to the end of the first heat exchange 4223a via the first throttle valve 4228a, the other end of the condenser 4221 is connected to one end of the third heat exchange channel 4227a via the second throttle valve 4228b, and the other end of the condenser 4221 is further connected to the other end of the third heat exchange channel 4227a, for example, connected to the other end of the third heat exchange channel 4227a via a stop valve 42214. The other end of the first heat exchange channel 4223a is connected to a third valve port of the four-way valve 4229 (an upper valve port of the four-way valve 4229 shown in the figure), a fourth valve port of the four-way valve 4229 (a left valve port of the four-way valve 4229 shown in the figure) is connected to the liquid storage tank 42210, and the liquid storage tank 42210 is further connected to the output end of the compressor 4222 and the other end of the third heat exchange channel 4227a, for example, the liquid storage tank 42210 is further connected to the liquid storage tank 42210 via a stop valve 42215.

During specific implementation, when the liquid cooling device 420 is connected to the vehicle-mounted charging connection apparatus 310, and the power battery 320 needs to be cooled, the lower valve port and the left valve port of the four-way valve 4229 may be controlled to be connected, and the upper valve port and the right valve port of the four-way valve 4229 may be controlled to be connected, so that the output end of the compressor 4222, the lower valve port of the four-way valve 4229, the left valve port of the four-way valve 4229, the condenser 4221, the first throttle valve 4228a, the first heat exchange channel 4223a, the upper valve port of the four-way valve 4229, the right valve port of the four-way valve 4229, the liquid storage tank 42210, and the input end of the compressor are sequentially connected, to form the first cooling loop; and the output end of the compressor 4222, the lower valve port of the four-way valve 4229, the left valve port of the four-way valve 4229, the condenser 4221, the second throttle valve 4228b, the third heat exchange channel 4227a, the liquid storage tank 42210, and the input end of the compressor 4222 are sequentially connected, to form the third cooling loop.

When the liquid cooling device 420 is connected to the vehicle-mounted charging connection apparatus 310, and the power battery 320 needs to be heated, the lower valve port and the upper valve port of the four-way valve 4229 may be controlled to be connected, and the left valve port and the right valve port of the four-way valve 4229 may be controlled to be connected, so that the output end of the compressor 4222, the lower valve port of the four-way valve 4229, the upper valve port of the four-way valve 4229, the first heat exchange channel 4223a, the first throttle valve 4228a, the left valve port of the four-way valve 4229, the right valve port of the four-way valve 4229, the liquid storage tank 42210, and the input end of the compressor 4222 are sequentially connected, to form the first heating loop. In this way, a cooling medium obtained through being heated and pressurized by the compressor 4222 may be transmitted to the first heat exchange channel 4223a of the first heat exchanger 4223 through the upper valve port of the four-way valve 4229, and exchange heat with the liquid-phase cooling medium circulating in the second heat exchange channel 4223b via the second heat exchange channel 4223b, to heat the liquid-phase cooling medium. A heated liquid-phase heating medium is transmitted to the vehicle-mounted charging connection apparatus 310, to exchange heat with the power battery 320 via the thermal management system 330, so as to heat the power battery 320.

In this embodiment of this application, a heating cycle pipeline is further disposed in the liquid cooling device 420, so that the liquid cooling device 420 can heat the power battery 320, to help meet temperature requirements of the electric vehicle 300 in different scenarios.

In some other embodiments, when the liquid cooling device 420 is connected to the vehicle-mounted charging connection apparatus 310, and the power battery 320 needs to be heated, the lower valve port and the upper valve port of the four-way valve 4229 may be controlled to be connected, and the left valve port and the right valve port of the four-way valve 4229 may be controlled to be connected, so that the output end of the compressor 4222, the lower valve port of the four-way valve 4229, the upper valve port of the four-way valve 4229, the first heat exchange channel 4223a, the first throttle valve 4228a, the third heat exchange channel 4227a, the stop valve 42214, the condenser 4221, the left valve port of the four-way valve 4229, the right valve port of the four-way valve 4229, the liquid storage tank 42210, and the input end of the compressor 4222 are sequentially connected, to form a second heating loop. In this way, a cooling medium obtained through being heated and pressurized by the compressor 4222 may be transmitted to the first heat exchange channel 4223a of the first heat exchanger 4223 through the upper valve port of the four-way valve 4229, and exchange heat with the liquid-phase cooling medium circulating in the second heat exchange channel 4223b via the second heat exchange channel 4223b, to heat the liquid-phase cooling medium. A heated liquid-phase heating medium is transmitted to the vehicle-mounted charging connection apparatus 310, to exchange heat with the power battery 320 via the thermal management system 330, so as to heat the power battery 320. In addition, in the second heating loop, the liquid-phase heating medium may absorb heat in the charging connector cooling loop 426 and heat in the condenser 4221, to improve efficiency of heating the power battery 320.

The foregoing describes specific composition of the vehicle-mounted charging connection apparatus 310 and the charging pile 410 in the charging system 200 provided in this embodiment of this application. The following further describes, with reference to the accompanying drawings, that the vehicle-mounted charging connection apparatus 310 and the charging pile 410 separately determine a status of connection between the vehicle-end liquid inlet/outlet 312 (namely, the first liquid inlet/outlet 312) and the pile-end liquid inlet/outlet 421 based on respective CC interfaces.

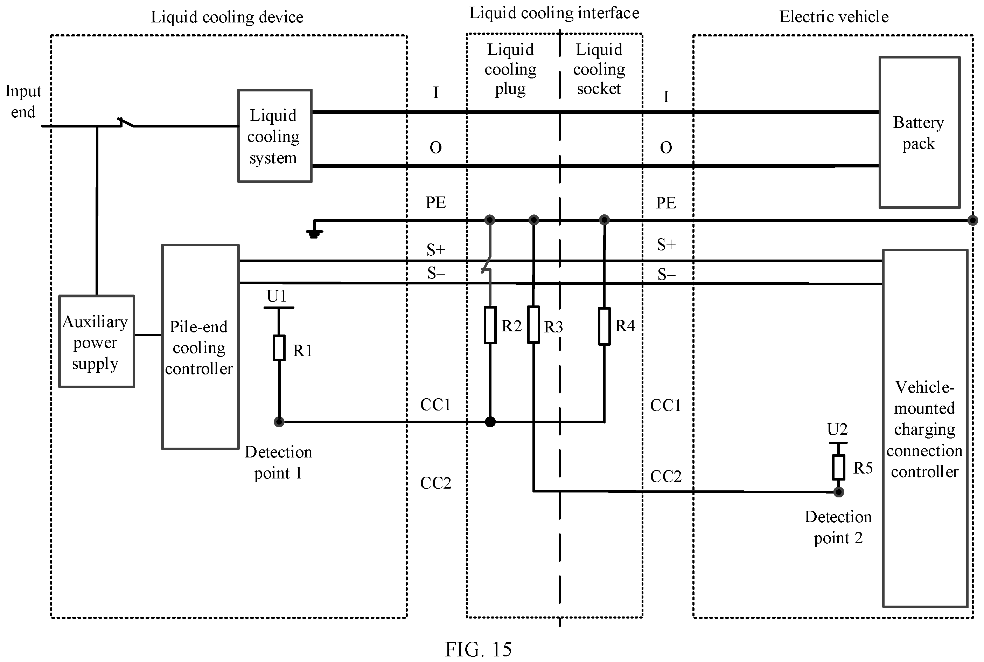

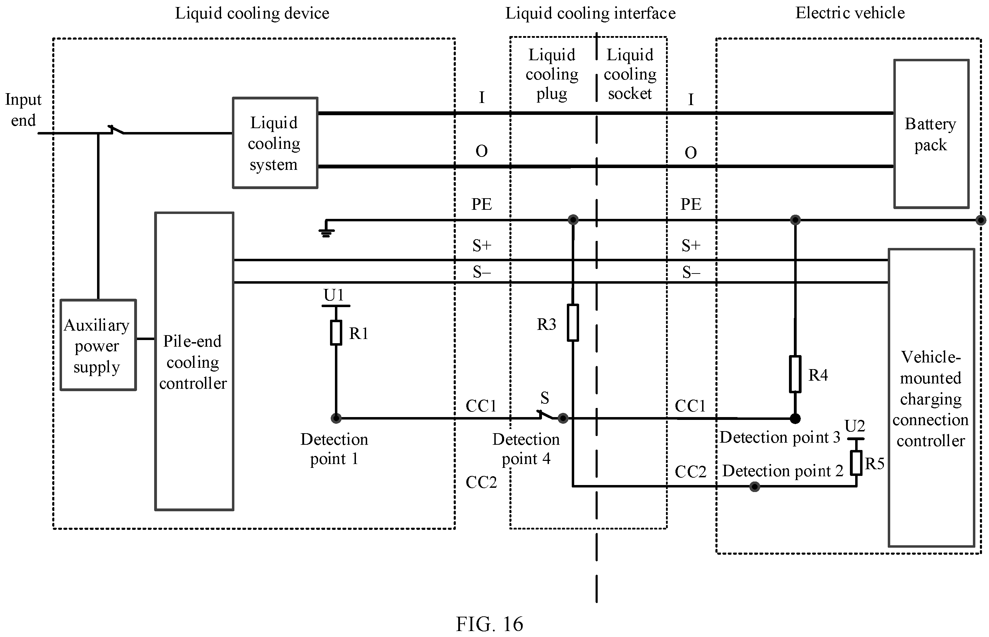

FIG. 15 and FIG. 16 each are a diagram of a structure of a specific circuit in which the vehicle-mounted charging connection apparatus 310 and the charging pile 410 separately determine the status of connection between the vehicle-end liquid inlet/outlet 312 (namely, the first liquid inlet/outlet 312) and the pile-end liquid inlet/outlet 421 based on the respective CC interfaces according to embodiments of this application.

With reference to FIG. 2, FIG. 15, and FIG. 16, when the liquid cooling device 420 is disposed outside the charging device 410, and the liquid cooling device 420 is separately connected to the vehicle-mounted charging connection apparatus 310 via a liquid cooling connector, a liquid cooling interface in FIG. 15 and FIG. 16 includes the pile-end liquid inlet/outlet 421 and the vehicle-end liquid inlet/outlet 312 in FIG. 2. The liquid cooling plug may include the pile-end liquid inlet/outlet 421, and the liquid cooling socket includes the vehicle-end liquid inlet/outlet 312.

Specifically, with reference to FIG. 4, FIG. 15, and FIG. 16, the liquid cooling socket includes the first liquid inlet interface 3121, the first liquid outlet interface 3122, and the vehicle-end cooling CC interface 3123. With reference to FIG. 12, the liquid cooling plug includes the pile-end liquid inlet interface 4211, the pile-end liquid outlet interface 4212, and the pile-end cooling CC interface 4213.

In some embodiments, the liquid cooling device 420 includes a pile-end cooling CC circuit. The pile-end cooling CC circuit may be electrically connected to the pile-end cooling controller 423 and the pile-end cooling CC interface 4213. The pile-end cooling controller 423 determines a voltage signal of the pile-end cooling CC interface 4213 via the pile-end cooling CC circuit, to determine a status of connection between the liquid cooling plug and the liquid cooling socket. The vehicle-mounted charging connection apparatus 310 includes a vehicle-end cooling CC circuit. The vehicle-end cooling CC circuit is electrically connected to the vehicle-mounted charging connection controller 315 and the vehicle-end cooling CC interface 3123. The vehicle-mounted charging connection controller 315 may determine a voltage signal of the vehicle-end cooling CC interface 3123 via the vehicle-end cooling CC circuit, to determine a status of connection between the liquid cooling plug and the liquid cooling socket.

Specifically, as shown in FIG. 15, the pile-end cooling CC circuit includes a first pile-end cooling CC circuit, the first pile-end cooling CC circuit includes a first pile-end resistor unit R3, the pile-end cooling CC interface 4213 includes a first pile-end cooling CC interface, the first pile-end cooling CC interface corresponds to a plug of a CC2 interface shown in the figure, and the first pile-end cooling CC interface is grounded via the first pile-end resistor unit R3. The vehicle-end cooling CC circuit includes a first vehicle-end cooling CC circuit, the first vehicle-end cooling CC circuit includes a first vehicle-end resistor unit R5 and a vehicle-end voltage source U2, the vehicle-end cooling CC interface 3123 includes a first vehicle-end cooling CC interface, and the first vehicle-end cooling CC interface corresponds to the plug of the CC2 interface shown in the figure. The first vehicle-end cooling CC interface is electrically connected to the vehicle-end voltage source U2 via the first vehicle-end resistor unit R5. A voltage signal of the first vehicle-end cooling CC interface is a voltage signal of a detection point 2.

Before the liquid cooling socket is connected to the liquid cooling plug, because the detection point 2 is connected to the vehicle-end voltage source U2, a voltage at the detection point 2 needs to be a voltage output by the vehicle-end voltage source U2. Only when the liquid cooling socket is connected to the liquid cooling plug, the vehicle-end voltage source U2 forms a loop via the first vehicle-end resistor unit R5, the first pile-end resistor unit R3, and a ground cable in the liquid cooling device, and the voltage at the detection point 2 can reach a first vehicle-end preset value because of a voltage division function of a resistor.

For example, the voltage output by the vehicle-end voltage source U2 is set to 12 V, and resistance values of R3 and R5 are equal. In this case, the first vehicle-end preset value is 6 V. In this design, if the voltage at the detection point 2 is 6 V, the vehicle-mounted charging connection apparatus identifies that the liquid cooling socket and the liquid cooling plug are in a connected state.

For another example, the voltage output by the vehicle-end voltage source U2 is still set to 12 V, but resistance values of R3 and R5 are different. For example, R3 is 2 Ω, and R5 is 4 Ω. In this case, the first vehicle-end preset value is 4 V. In this design, if the voltage at the detection point 2 is 4 V, the vehicle-mounted charging connection apparatus identifies that the liquid cooling socket and the liquid cooling plug are in a connected state.

Therefore, based on the foregoing analysis, when the voltage at the detection point 2 is the voltage output by the voltage source U2, the vehicle-mounted charging connection apparatus can identify that the liquid cooling socket is not connected to the liquid cooling plug. When the voltage at the detection point 2 reaches the first vehicle-end preset value, the vehicle-mounted charging connection apparatus can identify that the liquid cooling socket is connected to the liquid cooling plug.

In this embodiment of this application, because the first vehicle-end cooling CC interface is electrically connected to the vehicle-end voltage source in the vehicle-mounted charging connection apparatus 310, when a voltage value of the first vehicle-end cooling CC interface is a voltage value of the vehicle-end voltage source, it indicates that the pile-end liquid inlet/outlet 421 is not connected to the vehicle-end liquid inlet/outlet 312. When the voltage value of the first vehicle-end cooling CC interface reaches the first vehicle-end preset value, the vehicle-mounted charging connection apparatus 310 can identify that the pile-end liquid inlet/outlet 421 is connected to the vehicle-end liquid inlet/outlet 312. The status of connection between the pile-end liquid inlet/outlet 421 and the vehicle-end liquid inlet/outlet 312 is identified based on the voltage value of the first vehicle-end cooling CC interface, so that a correct rate of identifying the status of connection between the pile-end liquid inlet/outlet 421 and the vehicle-end liquid inlet/outlet 312 by the vehicle-mounted charging connection apparatus 310 can be improved, to meet a heat dissipation requirement of the power battery 320 during high-power charging, and facilitate high-power charging of the electric vehicle 300 by the charging device 410.

In some embodiments, as shown in FIG. 16, the pile-end cooling CC circuit further includes a second pile-end cooling CC circuit, the second pile-end cooling CC circuit includes a second pile-end resistor unit R1 and a pile-end voltage source U1, the pile-end cooling CC interface further includes a second pile-end cooling CC interface, the second pile-end cooling CC interface corresponds to a plug of a CC1 interface shown in the figure, and the second pile-end cooling CC interface is electrically connected to the pile-end voltage source U1 via the second pile-end resistor unit R1. The vehicle-end cooling CC circuit further includes a second vehicle-end cooling CC circuit, the second vehicle-end cooling CC circuit further includes a second vehicle-end resistor unit R4, the vehicle-end cooling CC interface 3123 further includes a second vehicle-end cooling CC interface, and the second vehicle-end cooling CC interface is grounded via the second vehicle-end resistor unit R4. A voltage signal of the second vehicle-end cooling CC interface is a voltage signal of a detection point 3, and a voltage signal of the second pile-end cooling CC interface is a voltage signal of a detection point 1.

Before the liquid cooling socket is connected to the liquid cooling plug, because the detection point 3 is connected to a vehicle electric platform, that is, grounded, a voltage at the detection point 3 needs to be 0 V. Only when the liquid cooling socket is connected to the liquid cooling plug, the pile-end voltage source U1 forms a loop via the second pile-end resistor unit R1, the second vehicle-end resistor unit R4, and a ground cable in the vehicle-mounted charging connection apparatus, and the voltage at the detection point 3 can reach a second vehicle-end preset value because of a voltage division function of a resistor.

For example, a voltage output by the pile-end voltage source U1 is set to 12 V, and resistance values of R1 and R4 are equal. In this case, the second vehicle-end preset value is 6 V. In this design, if the voltage at the detection point 3 is 6 V, the vehicle-mounted charging connection apparatus identifies that the liquid cooling socket and the liquid cooling plug are in a connected state.

For another example, a voltage output by the pile-end voltage source U1 is still set to 12 V, but resistance values of R1 and R4 are different. For example, R1 is 2 Ω, and R4 is 4 Ω. In this case, the second vehicle-end preset value is 8 V. In this design, if the voltage at the detection point 3 is 8 V, the vehicle-mounted charging connection apparatus identifies that the liquid cooling socket and the liquid cooling plug are in a connected state.

Therefore, based on the foregoing analysis, when the voltage at the detection point 2 is the voltage output by the voltage source U2 and the voltage at the detection point 3 is 0 V, the vehicle-mounted charging connection apparatus can identify that the liquid cooling socket is not connected to the liquid cooling plug. When the voltage at the detection point 2 reaches the first vehicle-end preset value and the voltage at the detection point 3 reaches the second vehicle-end preset value, the vehicle-mounted charging connection apparatus can identify that the liquid cooling socket is successfully connected to the liquid cooling plug.

Similarly, before the liquid cooling socket is connected to the liquid cooling plug, because the detection point 1 is connected to the pile-end voltage source U1, the voltage at the detection point 1 needs to be the voltage output by the pile-end voltage source U1. Only when the liquid cooling socket is connected to the liquid cooling plug, a current of the pile-end voltage source U1 forms a loop via the second pile-end resistor unit R1, the second vehicle-end resistor unit R4, and a ground cable in the vehicle-mounted charging connection apparatus. Because the detection point 1 is located between the second pile-end resistor unit R1 and the second vehicle-end resistor unit R4, the voltage at the detection point 1 can reach a first pile-end preset value because of a voltage division function of a resistor.

For example, the voltage output by the pile-end voltage source U1 is set to 12 V, and resistance values of R1 and R4 are equal. In this case, the first pile-end preset value is 6 V. In this design, if the voltage at the detection point 1 is 6 V, the liquid cooling device identifies that the liquid cooling socket and the liquid cooling plug are in a connected state.

For another example, the voltage output by the pile-end voltage source U1 is still set to 12 V, but resistance values of R1 and R4 are different. For example, R1 is 2 Ω, and R4 is 4 Ω. In this case, the first pile-end preset value is 8 V. In this design, if the voltage at the detection point 1 is 8 V, the liquid cooling device identifies that the liquid cooling socket and the liquid cooling plug are in a connected state.

Based on the foregoing analysis, when the voltage at the detection point 1 is the voltage output by the pile-end voltage source U1, the liquid cooling device can identify that the liquid cooling socket is not connected to the liquid cooling plug. When the voltage at the detection point 1 is the first pile-end preset value, the liquid cooling device can identify that the liquid cooling socket is successfully connected to the liquid cooling plug.

In this embodiment of this application, because the second pile-end cooling CC circuit is electrically connected to the pile-end voltage source in the charging pile, when a voltage value of the second pile-end cooling CC interface is an output voltage value of the pile-end voltage source, it indicates that the pile-end liquid inlet/outlet 421 is not connected to the vehicle-end liquid inlet/outlet 312. When the voltage value of the second pile-end cooling CC interface reaches the first pile-end preset value, the liquid cooling device 420 can identify that the pile-end liquid inlet/outlet 421 is connected to the vehicle-end liquid inlet/outlet 312. The status of connection between the pile-end liquid inlet/outlet 421 and the vehicle-end liquid inlet/outlet 312 is identified based on the voltage value of the second pile-end cooling CC interface, so that a correct rate of identifying the status of connection between the pile-end liquid inlet/outlet 421 and the vehicle-end liquid inlet/outlet 312 by the liquid cooling device 420 can be improved, to meet a heat dissipation requirement of the power battery 320 during high-power charging, and facilitate high-power charging of the electric vehicle 300 by the charging device 410.

In some embodiments, still as shown in FIG. 16, the second pile-end cooling CC circuit further includes a normally closed switch S, the second pile-end cooling CC interface is electrically connected to the second pile-end resistor unit R1 via the normally closed switch S, and detection between the second pile-end resistor unit R1 and the normally closed switch S is the detection point 1.

Before the liquid cooling socket is connected to the liquid cooling plug, because the detection point 1 is connected to the pile-end voltage source U1 and the switch S is a normally closed switch, both the voltage at the detection point 1 and a voltage at a detection point 4 need to be the voltage output by the pile-end voltage source U1. Only when the liquid cooling socket is connected to the liquid cooling plug, a current of the pile-end voltage source U1 forms a loop via the second pile-end resistor unit R1, the second vehicle-end resistor unit R4, and a ground cable in the vehicle-mounted charging connection apparatus. Because the detection point 1 is located between the resistor R1 and the resistor R4, the voltage at the detection point 1 and the voltage at the detection point 4 can reach the first pile-end preset value because of the voltage division function of the resistor. In another possible case, the liquid cooling socket is connected to the liquid cooling plug, but the switch S is in an off state. In this case, the detection point 1 is connected to the pile-end voltage source U1, and the detection point 4 is connected to the ground cable in the vehicle-mounted charging connection apparatus 310. As a result, the voltage at the detection point 1 is the voltage output by the pile-end voltage source U1, and the voltage at the detection point 4 is 0 V.

For example, the voltage output by the voltage source U1 is set to 12 V, and resistance values of R1 and R4 are equal. In this case, the first pile-end preset value is 6 V. In this design, if the voltage at the detection point 1 is 6 V, the liquid cooling device identifies that the liquid cooling socket is successfully connected to the liquid cooling plug. If the voltage at the detection point 1 is 12 V, and the voltage at the detection point 4 is 0 V, it indicates that the liquid cooling socket and the liquid cooling plug are in a connected state, but the switch S is turned off.

For another example, the voltage output by the voltage source U1 is still set to 12 V, but resistance values of R1 and R4 are different. For example, R1 is 2 Ω, and R4 is 4 Ω. In this case, the pile-end preset value is 8 V. In this design, if the voltage at the detection point 1 is 8 V, the liquid cooling device identifies that the liquid cooling socket and the liquid cooling plug are in a connected state. If the voltage at the detection point 1 is 12 V, and the voltage at the detection point 4 is 0 V, it indicates that the liquid cooling socket and the liquid cooling plug are in a connected state, but the switch S is turned off.

Based on the foregoing analysis, when the voltage at the detection point 1 and the voltage at the detection point 4 are the voltage output by the voltage source U1, the liquid cooling device can identify that the liquid cooling socket is not connected to the liquid cooling plug. When the voltage at the detection point 1 and the voltage at the detection point 4 are the first pile-end preset value, the liquid cooling device can identify that the liquid cooling socket is successfully connected to the liquid cooling plug. When the voltage at the detection point 1 is the voltage output by the voltage source U1 and the voltage at the detection point 4 is 0 V, the liquid cooling device identifies that the liquid cooling socket is connected to the liquid cooling plug but the switch S is in the off state.

In this embodiment of this application, the liquid cooling device 420 can further identify, based on the voltage value of the second pile-end cooling CC interface and with reference to the voltage value of the detection point between the normally closed switch and the second pile-end resistor unit, the status of connection between the pile-end liquid inlet/outlet 421 and the vehicle-end liquid inlet/outlet 312, to further improve a correct rate of identifying the status of connection between the pile-end liquid inlet/outlet 421 and the vehicle-end liquid inlet/outlet 312 by the liquid cooling device.

The foregoing separately describes determining, by the vehicle-mounted charging connection apparatus 310 and the liquid cooling device 420, the status of connection between the liquid cooling plug and the liquid cooling socket. For determining a status of connection between a charging socket and a charging plug that correspond to the pile-end charging output interface 411 and the vehicle-end charging input interface 311, refer to content of a related standard, including 2015, 2015+, ultra-fast charging, and the like.

The following describes a charging method that may be applied to the charging system 200 and that is provided in an embodiment of this application.

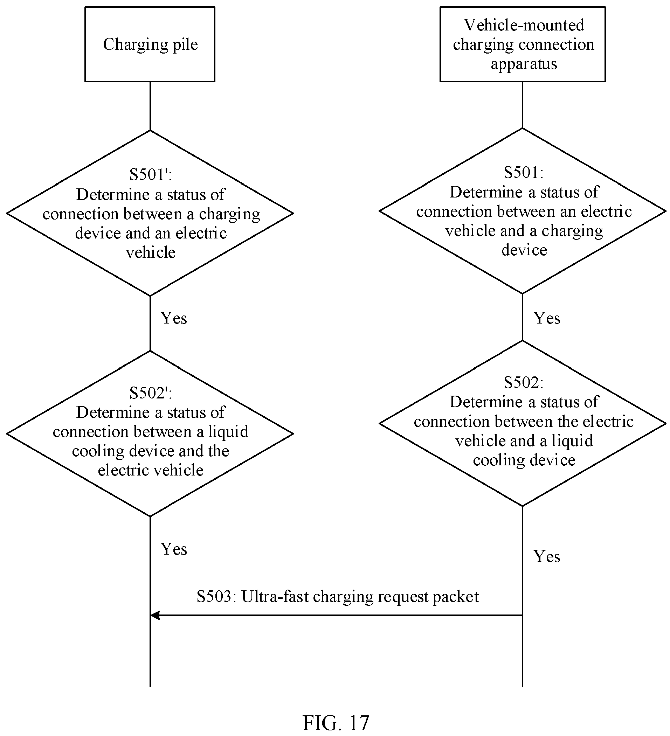

FIG. 17 is a schematic flowchart of a charging method 500 according to an embodiment of this application. The charging method 500 may be applied to the foregoing charging system 200. The charging system 200 includes the vehicle-mounted charging connection apparatus 310 and the charging pile 400. The vehicle-mounted charging connection apparatus 310 is used in the electric vehicle 300.

It should be understood that descriptions of the method embodiments correspond to the descriptions of the foregoing structure embodiments. Therefore, for content that is not described in detail, refer to the foregoing apparatus embodiments. Details are not described below.

Refer to FIG. 17. The charging method 500 may include the following steps.

S501 and S501': The vehicle-mounted charging connection apparatus 310 and the charging pile 400 may separately determine a status of connection between the electric vehicle 300 and the charging device 410 in the charging pile 400.

For example, with reference to FIG. 4 and FIG. 12, the vehicle-end charging input interface 311 in the vehicle-mounted charging connection apparatus 310 may be a charging socket, and the pile-end charging output interface 411 in the charging device 410 may be a charging plug. After the vehicle-mounted charging connection apparatus 310 and the charging pile 400 detect that the charging socket is inserted by the charging plug, the vehicle-mounted charging connection apparatus 310 may detect a voltage signal of the vehicle-end charging CC interface 3112 in the vehicle-end charging input interface 311, the charging pile 400 may detect a voltage signal of the pile-end charging CC interface 4112 in the pile-end charging output interface 411, and the vehicle-mounted charging connection apparatus 310 and the charging pile 400 separately determine, based on the detected voltage signals, a status of connection between the vehicle-end charging input interface 311 and the pile-end charging output interface 411, that is, the status of connection between the electric vehicle 300 and the charging device 410.

S502 and S502': When the vehicle-mounted charging connection apparatus 310 and the charging pile 400 separately determine that the electric vehicle 300 is connected to the charging device 410, the vehicle-mounted charging connection apparatus 310 and the charging pile 400 may separately determine a status of connection between the electric vehicle 300 and the liquid cooling device 420 in the charging pile 400.

For example, with reference to FIG. 4 and FIG. 12, the pile-end liquid inlet/outlet 421 in the liquid cooling device 420 may be a liquid cooling plug, and the first liquid inlet/outlet 312 in the vehicle-mounted charging connection apparatus 310 may be a liquid cooling socket. After the vehicle-mounted charging connection apparatus 310 and the charging pile 400 detect that the liquid cooling socket is inserted by the liquid cooling plug, the vehicle-mounted charging connection apparatus 310 may detect a voltage signal of the vehicle-end cooling CC interface 3123 in the first liquid inlet/outlet 312, the charging pile 400 may detect a voltage signal of the pile-end cooling CC interface 4213 in the pile-end liquid inlet/outlet 421, and the vehicle-mounted charging connection apparatus 310 and the charging pile 400 separately determine, based on the detected voltage signal, a status of connection between the first liquid inlet/outlet 312 and the pile-end liquid inlet/outlet 421, that is, the status of connection between the electric vehicle 300 and the liquid cooling device 420.

It may be understood that the foregoing sequence of determining the status of connection is merely an example. The vehicle-mounted charging connection apparatus 310 and the charging pile 400 may first determine the status of connection between the electric vehicle 300 and the liquid cooling device 420, and then determine the status of connection between the electric vehicle 300 and the charging device 410. Alternatively, the vehicle-mounted charging connection apparatus 310 and the charging pile 400 may simultaneously determine the status of connection between the electric vehicle 300 and the liquid cooling device 420 and the status of connection between the electric vehicle 300 and the charging device 410.

S503: The vehicle-mounted charging connection apparatus 310 may send an ultra-fast charging request packet to the charging pile 400 based on that the electric vehicle 300 is connected to the charging device 410 and that the electric vehicle 300 is connected to the liquid cooling device 420. The ultra-fast charging packet request indicates the charging device 410 to charge the electric vehicle 300 at a first output power, and the first output power is greater than or equal to a preset power.

Specifically, with reference to FIG. 4, in some embodiments, based on that the electric vehicle 300 is connected to the charging device 410 and that the electric vehicle 300 is connected to the liquid cooling device 420, the vehicle-mounted charging connection apparatus 310 may receive a charging request packet sent by the vehicle control unit 341 of the electric vehicle 300. The charging request packet indicates a charging power required for charging the power battery 320 in the electric vehicle 300, and may specifically indicate the charging device 410 to charge the electric vehicle 300 at the first output power.

It may be understood that the charging request packet may be sent by the battery management system 342 of the electric vehicle 300 to the vehicle control unit 341, and then sent by the vehicle control unit 341 to the vehicle-mounted charging connection apparatus 310. Alternatively, in some other embodiments, based on that the electric vehicle 300 is connected to the charging device 410 and that the electric vehicle 300 is connected to the liquid cooling device 420, the vehicle-mounted charging connection apparatus 310 may directly receive the charging request packet sent by the battery management system 342 of the electric vehicle 300.

It may be further understood that, in this embodiment of this application, when the charging power required for charging the power battery 320 in the electric vehicle 300, that is, the first output power, is greater than or equal to the preset power, it may indicate that the electric vehicle 300 is ultra-fast charged; or when the charging power required for charging the power battery 320 in the electric vehicle 300, that is, the first output power, is less than the preset power, it may indicate that the electric vehicle 300 is fast charged. The preset power may be, for example, 250 kW.

Correspondingly, after receiving the ultra-fast charging request packet, the charging pile 400 may control the charging device 410 to charge the electric vehicle 300 at the first output power.

In this embodiment of this application, when the charging power required for charging the power battery 320 in the electric vehicle 300 is high, for example, the required power is an ultra-fast charging power greater than the preset power, the vehicle-mounted charging connection apparatus 310 sends the power required for the power battery 320 to the charging pile 400 when the electric vehicle 300 is connected to both the charging device 410 and the liquid cooling device 420 in the charging pile 400, so that the liquid cooling device 420 may be further used to transmit the liquid-phase cooling medium to the electric vehicle 300 while the charging device 410 charges the power battery 320 at a high power, to meet a heat dissipation requirement of the power battery 320 during high-power charging, and facilitate high-power charging of the electric vehicle 300 by the charging device 410.

It may be understood that, in the foregoing charging method 500, with reference to FIG. 12, a step on a charging pile 400 side may be specifically performed by a pile-end controller in the charging pile 400, and the pile-end controller may include the pile-end charging controller 414 in the charging device 410 and the pile-end cooling controller 423 in the liquid cooling device 420. In an example, the pile-end cooling controller 423 may be integrated into the pile-end charging controller 414. With reference to FIG. 4, a step on a vehicle-mounted charging connection apparatus 310 side may be specifically performed by the vehicle-mounted charging connection controller 315 in the vehicle-mounted charging connection apparatus 310.

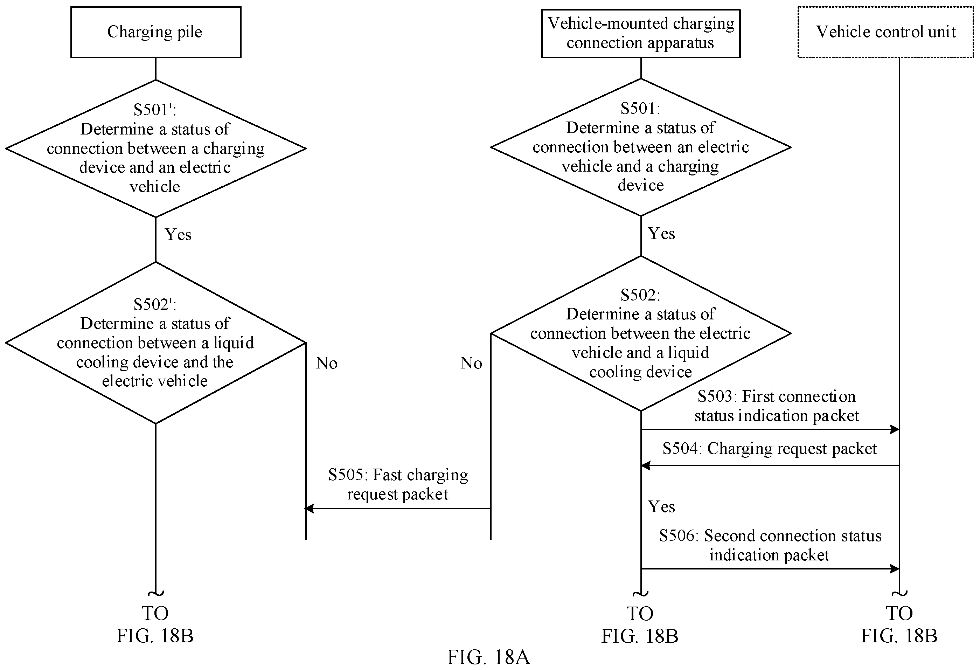

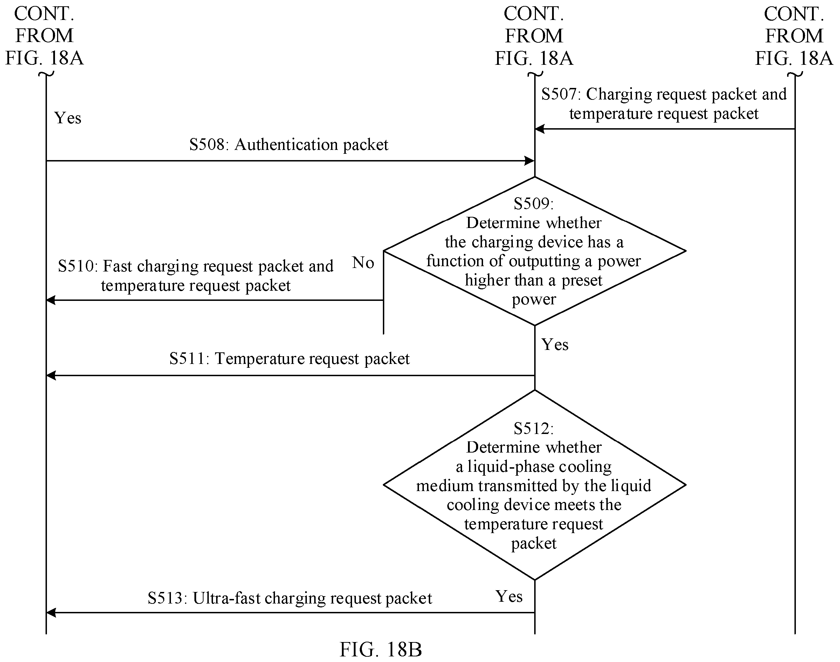

The following further describes in detail the charging method 500 provided in this embodiment of this application with reference to FIG. 18A and FIG. 18B.

FIG. 18A and FIG. 18B are another schematic flowchart of the charging method 500 according to an embodiment of this application. The charging method 500 may be applied to the foregoing charging system 200.

Refer to FIG. 18A and FIG. 18B. The charging method 500 may include the following steps.

S501 and S501': The vehicle-mounted charging connection apparatus 310 and the charging pile 400 may separately determine a status of connection between the electric vehicle 300 and the charging device 410 in the charging pile 400.

S502 and S502': When the vehicle-mounted charging connection apparatus 310 and the charging pile 400 separately determine that the electric vehicle 300 is connected to the charging device 410, the vehicle-mounted charging connection apparatus 310 and the charging pile 400 may separately determine a status of connection between the electric vehicle 300 and the liquid cooling device 420 in the charging pile 400.

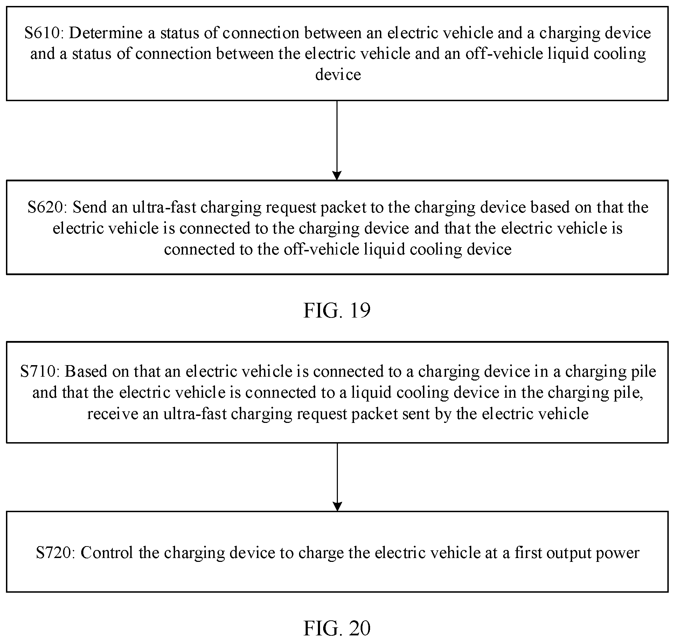

For specific descriptions of S501, S501', S502, and S502', refer to the embodiment shown in FIG. 19. Details are not described herein.

In a possible case, in S502 and S502', if the vehicle-mounted charging connection apparatus 310 and the charging pile 400 separately determine that the electric vehicle 300 is not connected to the liquid cooling device 420, the vehicle-mounted charging connection apparatus 310 performs S503.

S503: The vehicle-mounted charging connection apparatus 310 may send a first connection status indication packet to the vehicle control unit 341 of the electric vehicle 300 based on that the electric vehicle 300 is connected to the charging device 410 and that the electric vehicle 300 is not connected to the liquid cooling device 420.

The first connection status indication packet indicates that the electric vehicle 300 is connected to the charging device 410 and the vehicle-mounted charging connection apparatus 310 determines that the electric vehicle 300 is not connected to the liquid cooling device 420.

S504: The vehicle control unit 341 sends a charging request packet to the vehicle-mounted charging connection apparatus 310 based on the received first connection status indication packet.

The charging request packet indicates a charging power required for charging the power battery 320 in the electric vehicle 300, and specifically indicates the charging device 410 to charge the electric vehicle 300 at a first output power. The first output power is greater than or equal to a preset power.

S505: After receiving the charging request packet, the vehicle-mounted charging connection apparatus 310 sends a fast charging request packet to the charging pile 400 based on that the liquid cooling device 420 is not connected to the electric vehicle 300. The fast charging request packet indicates the charging device 410 to charge the electric vehicle 300 at an output power less than the preset power.

Correspondingly, after receiving the fast charging request packet, the charging pile 400 may control the charging device 410 to charge the electric vehicle 300 at the output power less than the preset power.

In this embodiment of this application, when the charging power required for charging the power battery 320 in the electric vehicle 300 is high, for example, the required power is an ultra-fast charging power greater than the preset power, if the electric vehicle 300 is not connected to the liquid cooling device 420 in the charging pile 400, the vehicle-mounted charging connection apparatus 310 may request a low charging power from the charging pile 400, for example, a fast charging power less than the preset power. This can avoid a problem that the power battery 320 is overheated because the charging power of the charging device 410 is excessively high, and help ensure that the charging device 410 normally charges the power battery 320 via the vehicle-mounted charging connection apparatus 310.

In another possible case, in S502 and S502', if the vehicle-mounted charging connection apparatus 310 and the charging pile 400 separately determine that the electric vehicle 300 is connected to the liquid cooling device 420, the vehicle-mounted charging connection apparatus 310 performs S506.

S506: The vehicle-mounted charging connection apparatus 310 may send a second connection status indication packet to the vehicle control unit 341 of the electric vehicle 300 based on that the electric vehicle 300 is connected to the charging device 410 and that the electric vehicle 300 is connected to the liquid cooling device 420. The second connection status indication packet indicates that the electric vehicle 300 is connected to the charging device 410 and the vehicle-mounted charging connection apparatus 310 determines that the electric vehicle 300 is connected to the liquid cooling device 420.

S507: The vehicle control unit 341 sends a charging request packet and a temperature request packet to the vehicle-mounted charging connection apparatus 310 based on the received second connection status indication packet.

The charging request packet indicates the charging device 410 to charge the power battery 320 of the electric vehicle 300 at a first output power, and the first output power is greater than or equal to a preset power. The temperature request packet indicates temperature requirement information of the electric vehicle 300, for example, a flow volume and a temperature of a liquid-phase cooling medium required for cooling when the power battery 320 is charged at the first output power.

S508: The vehicle-mounted charging connection apparatus 310 receives an authentication packet sent by the charging pile 400, where the authentication packet indicates whether the charging device 410 has a function of outputting a power greater than or equal to the preset power, that is, the authentication packet indicates whether the charging device has a function of ultra-fast charging the power battery 320.

S509: The vehicle-mounted charging connection apparatus 310 determines, based on the received authentication packet, whether the charging device 410 has the function of outputting the power greater than the preset power, and performs S510 if the charging device 410 does not have the function of outputting the power greater than the preset power.

S510: After receiving the charging request packet and the temperature request packet that are sent by the vehicle control unit 341, the vehicle-mounted charging connection apparatus 310 sends a fast charging request packet and the temperature request packet to the charging pile 400 based on the authentication packet indicating that the charging device 410 does not have the function of outputting the power greater than or equal to the preset power, that is, the charging device does not have the function of ultra-fast charging the power battery 320.

Correspondingly, after receiving the fast charging request packet and the temperature request packet, the charging pile 400 may control the charging device 410 to charge the power battery 320 at an output power less than the preset power, and control the liquid cooling device 420 to transmit the liquid-phase cooling medium to the electric vehicle 300 based on the temperature requirement information of the electric vehicle 300 indicated by the temperature request packet, to cool the power battery 320 during charging.

In this embodiment of this application, when the charging power required for charging the power battery 320 in the electric vehicle 300 is high, for example, the required power is an ultra-fast charging power greater than the preset power, if the charging device 410 in the charging pile 400 does not have an ultra-fast charging function, the vehicle-mounted charging connection apparatus 310 may request a low charging power from the charging pile 400, for example, a fast charging power less than the preset power, so that the charging device 410 can charge the power battery 320. In addition, the liquid cooling device 420 may transmit the liquid-phase cooling medium to the electric vehicle 300 based on an indication of the vehicle-mounted charging connection apparatus 310. This helps improve performance of cooling the power battery 320 during fast charging.

In some embodiments, the charging method 500 may further include: If the vehicle-mounted charging connection apparatus 310 determines, based on the received authentication packet, that the charging device 410 has the function of outputting the power greater than the preset power, the vehicle-mounted charging connection apparatus 310 may directly send both an ultra-fast charging request packet and the temperature request packet to the charging pile 400 after receiving the charging request packet and the temperature request packet that are sent by the vehicle control unit 341. The ultra-fast charging packet request indicates the charging device 410 to charge the electric vehicle 300 at a first output power.

Correspondingly, after receiving the ultra-fast charging request packet and the temperature request packet, the charging pile 400 may control the charging device 410 to charge the power battery 320 at the first output power, and control the liquid cooling device 420 to transmit the liquid-phase cooling medium to the electric vehicle 300 based on the temperature requirement information of the electric vehicle 300 indicated by the temperature request packet, to cool the power battery 320 during charging.

In this embodiment of this application, when the charging power required for charging the power battery 320 in the electric vehicle 300 is high, for example, the required power is an ultra-fast charging power greater than the preset power, if the charging device 410 in the charging pile 400 has an ultra-fast charging function, the vehicle-mounted charging connection apparatus 310 may send the power required for the power battery to the charging pile 400, so that the charging device 410 can charge the power battery 320 at a high power. In addition, the liquid cooling device 420 may alternatively transmit the liquid-phase cooling medium to the electric vehicle 300 based on an indication of the vehicle-mounted charging connection apparatus 310, to meet a heat dissipation requirement of the power battery 320 during high-power charging, and facilitate high-power charging of the electric vehicle 300 by the charging device 410.

In some other embodiments, if the vehicle-mounted charging connection apparatus 310 determines, based on the received authentication packet, that the charging device 410 has the function of outputting the power greater than the preset power, after receiving the charging request packet and the temperature request packet that are sent by the vehicle control unit 341, the vehicle-mounted charging connection apparatus 310 may first send the temperature request packet to the charging pile 400, and then send the ultra-fast charging request packet to the charging pile 400, that is, perform S511 to S513.

S511: After receiving the charging request packet and the temperature request packet that are sent by the vehicle control unit 341, the vehicle-mounted charging connection apparatus 310 sends the temperature request packet to the charging pile 400 based on the authentication packet indicating that the charging device 410 has the function of outputting the power greater than or equal to the preset power, that is, the charging device does not have the function of ultra-fast charging the power battery 320.

Correspondingly, after receiving the temperature request packet sent by the vehicle-mounted charging connection apparatus 310, the charging pile 400 may control the liquid cooling device 420 to transmit the liquid-phase cooling medium to the electric vehicle 300 based on the temperature requirement information of the electric vehicle 300 indicated by the temperature request packet, to cool the power battery 320.

S512: The vehicle-mounted charging connection apparatus 310 may monitor the liquid-phase cooling medium transmitted by the liquid cooling device 420, and determine whether the transmitted liquid-phase cooling medium meets the temperature request information of the electric vehicle 300 indicated by the temperature request packet. If the transmitted liquid-phase cooling medium meets the temperature request information of the electric vehicle 300, S513 is performed.

For example, during specific implementation, with reference to FIG. 4, the vehicle-mounted charging connection apparatus 310 may monitor, via the first liquid inlet interface temperature sensor 319, a temperature of the liquid-phase cooling medium that is transmitted by the liquid cooling device 420 and that is at the first liquid inlet interface 3121, to determine whether the transmitted liquid-phase cooling medium meets the temperature request information of the electric vehicle 300.

S513: The vehicle-mounted charging connection apparatus 310 sends the ultra-fast charging request packet to the charging pile 400 based on that the liquid-phase cooling medium transmitted by the liquid cooling device 420 meets the temperature requirement information of the electric vehicle 300.

Correspondingly, after receiving the ultra-fast charging request packet, the charging pile 400 may control the charging device 410 to charge the power battery 320 at the first output power.

In this embodiment of this application, when the charging power required for charging the power battery 320 in the electric vehicle 300 is high, for example, the required power is an ultra-fast charging power greater than the preset power, the vehicle-mounted charging connection apparatus 310 may first send the temperature request packet to the charging pile 400, for the liquid cooling device 420 in the charging pile 400 to first transmit the liquid-phase cooling medium to the electric vehicle 300, and then send the ultra-fast charging request packet to the charging pile 400 after the transmitted liquid-phase cooling medium meets the temperature requirement of the electric vehicle 300, so that the charging device charges the power battery 320 at a high power. This helps further ensure that the liquid-phase cooling medium transmitted by the liquid cooling device 420 meets a heat dissipation requirement of the power battery 320 during high-power charging, and facilitates high-power charging of the electric vehicle 300 by the charging device 410.

In some embodiments, the charging method 500 may further include: Based on that the electric vehicle 300 is connected to the charging device 410 and that the electric vehicle 300 is connected to the liquid cooling device 420, the vehicle-mounted charging connection apparatus 310 may control a power transmission loop between the electric vehicle 300 and the charging device 410 to be connected, and monitor a temperature of the power transmission loop.

For example, during specific implementation, with reference to FIG. 4, the vehicle-mounted charging connection apparatus 310 may control, based on that the electric vehicle 300 is connected to the charging device 410 and that the electric vehicle 300 is connected to the liquid cooling device 420, the charging loop contactor 351 in the power distribution unit 350 to be turned on, to connect the power transmission loop between the electric vehicle 300 and the charging device 410. In addition, the vehicle-mounted charging connection apparatus 310 may monitor, via the vehicle-end direct current interface temperature sensor 316, a temperature of a power transmission loop electrically connected to the vehicle-end direct current interface 3111.

In some embodiments, the charging method 500 may further include: The vehicle-mounted charging connection apparatus 310 sends a power limiting request packet to the charging pile 400 when the temperature of the power transmission loop between the electric vehicle 300 and the charging device 410 is greater than a preset temperature, where the power limiting request packet indicates the charging device 410 to reduce an output power.

Correspondingly, after receiving the power limiting request packet sent by the vehicle-mounted charging connection apparatus 310, the charging pile 400 controls the charging device 410 to reduce the output power.

In this embodiment of this application, the vehicle-mounted charging connection apparatus 310 may monitor the temperature of the power transmission loop in real time, and indicate the charging device 410 to reduce the output power when the temperature is abnormal, to help further meet a temperature requirement of the power battery 320 during charging, and ensure that the charging device 410 normally charges the power battery 320.

FIG. 19 is a schematic flowchart of a charging method 600 according to an embodiment of this application. The charging method 600 may be performed by the foregoing vehicle-mounted charging connection apparatus 310, and may be specifically performed by the vehicle-mounted charging connection controller 315 in the vehicle-mounted charging connection apparatus 310.

Refer to FIG. 19. The charging method 600 may include the following steps.

S610: Determine a status of connection between an electric vehicle 300 and a charging device and a status of connection between the electric vehicle 300 and an off-vehicle liquid cooling device. For example, a status of connection between the electric vehicle 300 and the charging device 410 in the charging pile 400 and a status of connection between the electric vehicle 300 and the liquid cooling device 420 are determined.

For example, with reference to FIG. 4 and FIG. 12, the vehicle-end charging input interface 311 and the first liquid inlet/outlet 312 in the vehicle-mounted charging connection apparatus 310 may be, for example, a charging socket and a liquid cooling socket respectively. After detecting that the charging socket is inserted by the charging device 410 and the liquid cooling socket is inserted by the liquid cooling device 420, the vehicle-mounted charging connection controller 315 may separately detect a voltage signal of the vehicle-end charging CC interface 3112 in the vehicle-end charging input interface 311 and a voltage signal of the vehicle-end cooling CC interface 3123 in the first liquid inlet/outlet 312, and determine the status of connection between the electric vehicle 300 and the charging device 410 in the charging pile 400 and the status of connection between the electric vehicle 300 and the liquid cooling device 420 based on the detected voltage signals.

S620: Send an ultra-fast charging request packet to the charging device based on that the electric vehicle 300 is connected to the charging device and that the electric vehicle 300 is connected to the off-vehicle liquid cooling device.

The ultra-fast charging request packet indicates the charging device to charge the electric vehicle at a first output power, and the first output power is greater than or equal to a preset power.

For the charging method that is not described in detail, refer to the related descriptions of the charging method 500. Details are not described herein again.

In this embodiment of this application, when a charging power required for charging a power battery 320 in the electric vehicle 300 is high, for example, the required power is an ultra-fast charging power greater than the preset power, when the electric vehicle 300 is connected to both the charging device and the off-vehicle liquid cooling device, the vehicle-mounted charging connection apparatus 310 sends the power required for the power battery 320 to the charging device, so that the off-vehicle liquid cooling device may be further used to transmit a liquid-phase cooling medium to the electric vehicle 300 while the charging device charges the power battery 320 at a high power, to meet a heat dissipation requirement of the power battery 320 during high-power charging, and facilitate high-power charging of the electric vehicle 300 by the charging device.

FIG. 20 is a schematic flowchart of a charging method 700 according to an embodiment of this application. The charging method 700 may be performed by the foregoing charging pile 400, and may be specifically performed by the pile-end controller in the charging pile 400, for example, the pile-end charging controller 414 in the charging device 410 and the pile-end cooling controller 423 in the liquid cooling device 420.

Refer to FIG. 20. The charging method 700 may include the following steps.

S710: Based on that an electric vehicle 300 is connected to the charging device 410 in the charging pile 400 and that the electric vehicle 300 is connected to the liquid cooling device 420 in the charging pile 400, send an ultra-fast charging request packet to the charging pile 400 . The ultra-fast charging request packet indicates the charging device to charge the electric vehicle at a first output power, and the first output power is greater than or equal to a preset power.

For example, with reference to FIG. 4 and FIG. 12, the pile-end charging output interface 411 in the charging device 410 may be a charging plug, and the pile-end liquid inlet/outlet 421 in the liquid cooling device 420 may be a liquid cooling plug. After detecting that both the charging plug and the liquid cooling plug are inserted into the vehicle-mounted charging connection apparatus 310 of the electric vehicle 300, the pile-end controller may separately detect a voltage signal of the pile-end charging CC interface 4112 in the pile-end charging output interface 411 and a voltage signal of the pile-end cooling CC interface 4213 in the pile-end liquid inlet/outlet 421, and determine, based on the detected voltage signals, that both the charging device 410 and the liquid cooling device 420 are connected to the electric vehicle 300.

S720: Control the charging device 410 to charge the electric vehicle 300 at the first output power.

For the charging method that is not described in detail, refer to the related descriptions of the charging method 500. Details are not described herein again.

In this embodiment of this application, when a charging power required for charging a power battery 320 in the electric vehicle 300 is high, for example, the required power is an ultra-fast charging power greater than the preset power, the connected liquid cooling device 420 can transmit a liquid-phase cooling medium to the electric vehicle 300 while the charging pile 400 may charge the power battery 320 at a high power when both the charging device 410 and the liquid cooling device 420 are connected to the electric vehicle 300, to meet a heat dissipation requirement of the power battery 320 during high-power charging, and facilitate high-power charging of the electric vehicle 300 by the charging device 410.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An electric vehicle, comprising a power battery and a thermal management system, wherein
the thermal management system comprises a first cooling loop, a second cooling loop, a first heat exchanger, and a cooling component;
the first heat exchanger comprises a first heat exchange channel and a second heat exchange channel, the first heat exchange channel is connected to the first cooling loop, and the power battery and the second heat exchange channel are sequentially connected to the second cooling loop;
the first cooling loop exchanges heat with the second cooling loop via the first heat exchanger, and the second cooling loop is configured to cool the power battery; and
the cooling component comprises a cooling liquid inlet pipeline and a cooling liquid outlet pipeline, the cooling liquid inlet pipeline and the cooling liquid outlet pipeline are separately configured to connect to an off-vehicle liquid cooling device to form a third cooling loop with the off-vehicle liquid cooling device, and the third cooling loop is configured to cool the power battery.

2. The electric vehicle according to claim 1, wherein the cooling component further comprises a first three-way valve and a second three-way valve, wherein
an input end of the power battery is connected to one end of the second heat exchange channel through the first three-way valve, and an output end of the power battery is connected to the other end of the second heat exchange channel through the second three-way valve; and
one end of the cooling liquid inlet pipeline is configured to connect to the off-vehicle liquid cooling device, and the other end of the cooling liquid inlet pipeline is connected to the input end of the power battery through the first three-way valve; and one end of the cooling liquid outlet pipeline is configured to connect to the off-vehicle liquid cooling device, and the other end of the cooling liquid outlet pipeline is connected to the output end of the power battery through the second three-way valve, to form the third cooling loop.

3. The electric vehicle according to claim 1, wherein the cooling component further comprises a first three-way valve and a second three-way valve, wherein
the first three-way valve, the second heat exchange channel, the power battery, and the second three-way valve are sequentially connected to the second cooling loop; and
one end of the cooling liquid inlet pipeline is configured to connect to the off-vehicle liquid cooling device, and the other end of the cooling liquid inlet pipeline is sequentially connected to the second heat exchange channel and an input end of the power battery through the first three-way valve; and one end of the cooling liquid outlet pipeline is configured to connect to the off-vehicle liquid cooling device, and the other end of the cooling liquid outlet pipeline is connected to an output end of the power battery through the second three-way valve, to form the third cooling loop.

4. The electric vehicle according to claim 3, wherein the cooling component further comprises a stop valve, and the stop valve is connected to the second cooling loop and is located between the first three-way valve and the second three-way valve.

5. The electric vehicle according to claim 1, wherein the cooling component further comprises a second heat exchanger;
the second heat exchanger comprises two heat exchange channels, and one of the two heat exchange channels is connected to the second cooling loop;
one end of the cooling liquid inlet pipeline is configured to connect to the off-vehicle liquid cooling device, and the other end of the cooling liquid inlet pipeline is connected to one end of the other one of the two heat exchange channels; and one end of the cooling liquid outlet pipeline is configured to connect to the off-vehicle liquid cooling device, and the other end of the cooling liquid outlet pipeline is connected to the other end of the other heat exchange channel, to form the third cooling loop; and
the third cooling loop exchanges heat with the second cooling loop via the second heat exchanger.

6. The electric vehicle according to claim 1, wherein the first heat exchanger further comprises a third heat exchange channel;
one end of the cooling liquid inlet pipeline is configured to connect to the off-vehicle liquid cooling device, and the other end of the cooling liquid inlet pipeline is connected to one end of the third heat exchange channel; and one end of the cooling liquid outlet pipeline is configured to connect to the off-vehicle liquid cooling device, and the other end of the cooling liquid outlet pipeline is connected to the other end of the third heat exchange channel, to form the third cooling loop; and
the third cooling loop exchanges heat with the second cooling loop via the first heat exchanger.

7. The electric vehicle according to any one of claims 2 to 6, wherein the electric vehicle further comprises a vehicle-mounted charging connection apparatus;
the vehicle-mounted charging connection apparatus comprises at least one vehicle-end charging input interface, a vehicle-end charging output interface, a first liquid inlet/outlet, and a second liquid inlet/outlet;
each of the at least one vehicle-end charging input interface is electrically connected to the power battery through the vehicle-end charging output interface, and each vehicle-end charging input interface is configured to electrically connect to a charging device, so that the charging device outputs a direct current to the power battery; and
the first liquid inlet/outlet is connected to the second liquid inlet/outlet, the second liquid inlet/outlet is separately connected to one end of the cooling liquid inlet pipeline and one end of the cooling liquid outlet pipeline, and the first liquid inlet/outlet is configured to connect to the off-vehicle liquid cooling device, to form the third cooling loop.

8. The electric vehicle according to claim 7, wherein each vehicle-end charging input interface comprises a vehicle-end direct current interface and a vehicle-end charging connection confirm CC interface, the first liquid inlet/outlet comprises a first liquid inlet interface, a first liquid outlet interface, and a vehicle-end cooling CC interface, and the second liquid inlet/outlet comprises a second liquid inlet interface and a second liquid outlet interface, wherein
the vehicle-end direct current interface is configured to transmit, to the vehicle-end charging output interface, the direct current output by the charging device;
a voltage signal of the vehicle-end charging CC interface indicates a status of connection between the vehicle-end charging input interface and the charging device;
the first liquid inlet interface is connected to the second liquid outlet interface, and the second liquid outlet interface is connected to one end of the cooling liquid inlet pipeline, to transmit a liquid-phase cooling medium in the off-vehicle liquid cooling device to the cooling liquid inlet pipeline;
the first liquid outlet interface is connected to the second liquid inlet interface, and the second liquid inlet interface is connected to one end of the cooling liquid outlet pipeline, to transmit the liquid-phase cooling medium in the cooling liquid outlet pipeline to the off-vehicle liquid cooling device; and
a voltage signal of the vehicle-end cooling CC interface indicates a status of connection between the first liquid inlet/outlet and the off-vehicle liquid cooling device.

9. The electric vehicle according to claim 8, wherein the vehicle-mounted charging connection apparatus further comprises a liquid inlet pipeline, a heat exchange structure, and a liquid outlet pipeline, wherein
the liquid inlet pipeline is configured to transmit, to the second liquid outlet interface, the liquid-phase cooling medium that is in the off-vehicle liquid cooling device and that is received through the first liquid inlet interface;
the heat exchange structure is connected to the liquid inlet pipeline, and the heat exchange structure is configured to exchange heat with the vehicle-end direct current interface and a power transmission cable electrically connected to the vehicle-end direct current power supply interface; and
the liquid outlet pipeline is configured to transmit, to the first liquid outlet interface, the liquid-phase cooling medium that is in the cooling liquid outlet pipeline and that is received through the second liquid inlet interface.

10. The electric vehicle according to claim 9, wherein the vehicle-mounted charging connection apparatus further comprises a heating liquid inlet pipeline; and
the heating liquid inlet pipeline is configured to transmit, to the second liquid outlet interface, a liquid-phase heating medium that is in the off-vehicle liquid cooling device and that is received through the first liquid inlet interface.
